# EUROPEAN PATENT SPECIFICATION

(11) **EP 3 453 859 B1**
(45) Date of publication and mention of the grant of the patent: **18.03.2020**
(21) Application number: 17836850.2
(22) Date of filing: 27.07.2017
(51) Int. Cl.: F02D 29/02, F02D 29/06, F02D 45/00, F02D 41/12, F02N 11/08, F02N 11/04

(54) **ENGINE CONTROL DEVICE, ENGINE UNIT, AND VEHICLE**
MOTORSTEUERUNGSVORRICHTUNG, MOTOREINHEIT UND FAHRZEUG
DISPOSITIF DE COMMANDE DE MOTEUR, ENSEMBLE MOTEUR ET VÉHICULE

(30) Priority: 02.08.2016 JP 2016152238
(43) Date of publication of application: 13.03.2019
(73) Proprietor: Yamaha Hatsudoki Kabushiki Kaisha, Iwata-shi, Shizuoka 438-8501 (JP)
(72) Inventor: HINO, Haruyoshi, Iwata-shi, Shizuoka 438-8501 (JP); NISHIKAWA, Takahiro, Iwata-shi, Shizuoka 438-8501 (JP)
(74) Representative: Stöckeler, Ferdinand
(86) International application number: PCT/JP2017/027236
(87) International publication number: WO 2018/025744

(56) References cited:
- EP-A1- 1 329 620
- DE-T5-112014 002 892
- JP-A- 2001 163 129
- JP-A- 2009 138 647
- JP-A- 2014 194 184
- JP-A- 2014 194 184
- JP-A- 2016 118 123
- US-A1- 2013 085 657

## Description

### Technical Field

The present teaching relates to an engine control device, an engine unit, and a vehicle.

### Background Art

An engine control device that controls an engine mounted on a vehicle is known. One of such engine control devices is an engine control device that automatically stops engine idling not dependent on an operation but in accordance with a predetermined condition from the viewpoint of environmental issues and energy saving.

The engine control device that automatically stops engine idling not dependent on an operation is configured to, after an engine stop, restart the engine in response to an operation. In the restart of the engine, a crankshaft of the engine is driven by a motor. The motor is operated by electric power supplied from a battery. This is why a technique has been proposed for reducing a risk that an insufficient electric power supply from the battery to the motor may be caused by, for example, poor battery charging or a battery deterioration over time, which may otherwise make an engine restart difficult.

Patent Literature 1 (PTL 1) proposes that a battery's ability is diagnosed in an engine control device that stops the engine in accordance with a predetermined stop condition. The engine control device of PTL 1 includes a multi-phase motor that performs engine cranking. The engine control device of PTL 1 causes a drive current to flow in each phase while the multi-phase motor is stopped, with such a conduction pattern that the multi-phase motor generates a local minimum driving force. The engine control device of PTL 1 diagnoses the battery's ability based on at least one of a battery voltage or a drive current at a time of causing the drive current to flow. Depending on a result of the diagnosis, the engine control device of PTL 1 prohibits the engine stop that is performed in response to the stop condition.

The technique proposed in PTL 1 prohibits the engine stop based on a diagnosis of the battery's ability during stopping of the multi-phase motor, to enhance a control performance in relation to the engine stop and engine restart. PTL 2 checks the battery state by operating the starter during an engine idling phase with the starter being disconnected from the crankshaft.

### Citation List

### Patent Literature

PTL 1: Japanese Patent No. 3976180
PTL 2: JP2014194184 A

### Summary of Invention

### Technical Problem

Behaviors of a vehicle equipped with an engine control device that is based on the technique as conventionally proposed were evaluated to reveal the fact that, for example, a battery with a large capacity is adopted in order to prevent an engine-starting performance from dropping in certain situations.

In a vehicle on which an engine and a battery are mounted, however, it is demanded that the battery be downsized from the viewpoint of mountability, environmental issues, and energy saving.

An object of the present teaching is to provide: an engine control device capable of downsizing a battery while maintaining an engine-starting performance; and the engine control device.

### Solution to Problem

The present teaching employs the following configurations.
(1) An engine control device including an engine, a motor configured to rotationally drive a crankshaft of the engine, and a battery that stores electric power to be supplied to the motor, the engine control device being configured to be mounted on a vehicle that is driven by the engine,
   the engine control device including:
   an electric power supply unit configured to perform a control for supplying electric power of the battery to the motor such that the motor generates a driving force in at least part of a deceleration period during which the crankshaft is rotating without any acceleration of the vehicle from a time point when the vehicle starts to decelerate;
   a battery state acquisition unit that acquires at least one of a voltage value or a current value of the battery at least when electric power of the battery is supplied to the motor under a control that the electric power supply unit performs in at least part of the deceleration period; and
   an operation control unit that performs a control for stopping engine idling or prohibiting a stop of the idling and/or a control on the motor in relation to starting after a stop of the engine idling, based on at least one of a voltage value or a current value of the battery acquired by the battery state acquisition unit when electric power of the battery is supplied to the motor under a control that the electric power supply unit performs in at least part of the deceleration period.

   In the engine control device of (1), the motor generates a driving force in at least part of the deceleration period. At this time, a voltage value and a current value of the battery are acquired by the battery state acquisition unit, and based on at least one of these values, a control for stopping engine idling or prohibiting a stop of the idling and/or a control on the motor in relation to starting after a stop of the engine idling is/are performed.
   In the engine control device of (1), a control for stopping engine idling or prohibiting a stop of the idling and/or a control on the motor in relation to starting after a stop of the engine idling is/are performed based on a battery state acquired in the deceleration period. This can shorten time intervals among a timing when a battery state is acquired for the determination, a timing when the determination is made, and a timing when a control about a stop of engine idling and/or a control on the motor in relation to starting is/are performed. This contributes to reduced differences among a battery state at a time point when the battery state is acquired for the control, a battery state obtained when the determination is made, and a battery state at a time point when a control is performed based on the determination. This makes it possible to suppress an increase in battery capacity which may be needed for absorbing a potential difference, while retaining an engine-starting performance. Accordingly, the engine control device of (1) enables downsizing of the battery while retaining an engine-starting performance.
   The present inventors conducted studies about a stop of idling and a restart of an engine after the stop of idling. A description of the studies will be given below.
   For example, in the engine control device as disclosed in PTL 1, an engine stop in response to a stop condition is prohibited while the crankshaft is rotating. A determination of whether or not to prohibit the engine stop is made based on at least one of a battery voltage or a drive current. As at least one of the battery voltage or the drive current, a value detected while the motor is stopped is used. That is, in PTL 1, a value used for the determination of whether or not to prohibit the engine stop is less likely to reflect a change of the battery state from when the engine is stopped before the determination to when the engine is in an engine operating period after being started.
   In the engine operating period, for example, the motor may generate electric power to charge the battery. In this case, a charged capacity of the battery at a time when a determination about prohibition of an engine stop is made is increased as compared to a charged capacity during a previous stop of the motor. In the engine operating period, for example, the motor may receive an electric power supply from the battery to accelerate rotation of the crankshaft. In this case, a charged capacity of the battery at a time when a determination about prohibition of an engine stop is made is reduced as compared to a charged capacity during a previous stop of the motor. In the engine operating period, for example, the motor may receive an electric power supply from the battery to apply negative acceleration to rotation of the crankshaft. In this case, a charged capacity of the battery at a time when a determination about prohibition of an engine stop is made is reduced as compared to a charged capacity during a previous stop of the motor. For example, the engine operating period may include both a period in which the motor receives an electric power supply from the battery and a period in which the battery is charged. In a case where the engine operating period includes both a period in which the motor receives an electric power supply from the battery and a period in which the battery is charged, a battery state varies depending on environmental conditions of the battery. For example, a lead-acid battery has its charging performance more dependent on a temperature as compared to its discharging performance. For example, when the lead-acid battery is in a lower-temperature state, its internal resistance at a time of charging is considerably higher than its internal resistance at a time of discharging. As a result, a charged capacity is likely to decrease.
   Thus, a battery's ability acquired based on a battery voltage and a drive current that are detected while the motor is stopped may be largely different from a battery's ability at a time when the determination about prohibition of an engine stop is made. For example, a situation arises in which a battery's ability at a time when the determination about prohibition of an engine stop is made is lower than an ability based on a battery voltage and a drive current that are detected while the motor is stopped. This situation requires a size increase of the battery such that electric power sufficient for restarting the engine can be supplied to a starting motor.
   As described above, a conventional vehicle is provided with a high-capacity battery capable of retaining a restart performance. A large battery, however, is not preferable from the viewpoint of downsizing in a vehicle on which an engine and the battery are mounted.
   According to the present teaching, electric power of the battery is supplied to the motor in at least part of the deceleration period. The deceleration period is a period during which the crankshaft is rotating without any acceleration of the vehicle from a time point when the vehicle starts to decelerate. A control for stopping engine idling or prohibiting a stop of the idling and/or a control on the motor in relation to starting after a stop of the engine idling is/or performed based on at least one of a voltage value or a current value of the battery acquired in the deceleration period. The engine control device of (1) can shorten a time interval between a timing of acquiring the value and a timing related to an engine control based on the acquired value. This contributes a reduced difference between battery states at the respective timings. This enables downsizing of the battery while retaining an engine-starting performance.
(2) The engine control device according to (1), wherein
   the operation control unit includes:
   a permission determining unit that determines whether or not to permit a stop of the engine idling based on at least one of a voltage value or a current value of the battery acquired by the battery state acquisition unit when electric power of the battery is supplied to the motor under a control that the electric power supply unit performs in at least part of the deceleration period; and
   an engine control unit that controls the engine so as to shift from the deceleration period to a state where the engine idling is stopped if a stop of the engine idling is permitted by the permission determining unit, as well as an idling stop condition that is predefined as a condition for stopping the engine idling is satisfied, and so as to prohibit shift from the deceleration period to a state where the engine idling is stopped if a stop of the engine idling is not permitted by the permission determining unit.

   In the engine control device of (2), whether or not to permit a stop of engine idling is determined based on at least one of a voltage value or a current value of the battery acquired by the battery state acquisition unit in at least part of the deceleration period. If a stop of engine idling is permitted and an idling stop condition is satisfied, the engine is controlled so as to shift from the deceleration period to a state where the engine idling is stopped. If a stop of engine idling is not permitted, the engine is controlled so as to prohibit a stop of engine idling.
   The engine control device of (2) can shorten time intervals among a timing when at least one of a voltage value or a current value is acquired, a timing when the determination is made, and a timing when shift to a state where engine idling is stopped is made. The engine control device of (2) contributes to reduced differences among battery states at the respective timings. This enables downsizing of the battery while retaining an engine-starting performance.
(3) The engine control device according to (1) or (2), wherein
   the vehicle includes an acceleration operator that instructs that the vehicle be accelerated in accordance with a driver's operation, and
   the electric power supply unit is configured to perform a control for supplying electric power of the battery to the motor such that the motor generates a driving force in at least part of a period during which an acceleration instruction from the acceleration operator is stopped within the deceleration period.
   In a period during which an acceleration instruction from the acceleration operator is stopped, a driver's operation is performed with intention to decelerate or stop the vehicle. In this case, there is a high likelihood that a shift to a state where engine idling is stopped occurs. In the engine control device of (2), whether or not to permit a shift to a state where idling is stopped is determined based on a battery state acquired when there is a high likelihood that a shift to a state where engine idling is stopped occurs due to the driver's operation. This can further shorten time intervals among a timing when a battery state is acquired for the determination, a timing when the determination is made, and a timing when a shift to a state where engine idling is stopped is made. Consequently, an increase in a difference can be further suppressed between a battery state at a time of the determination and a battery state at a time point of restarting the engine. Accordingly, it is possible to improve a restart performance of the engine while suppressing an increase in battery capacity which may be needed for absorbing a potential difference. This enables further downsizing of the battery while retaining an engine-starting performance.
(4) The engine control device according to any one of (1) to (3), wherein
   the electric power supply unit is configured to perform a control for supplying electric power of the battery to the motor such that the motor generates a driving force in at least part of a period outside a period during which the engine performs fuel combustion within the deceleration period.
   In the engine control device of (4), electric power of the battery is supplied to the motor such that the motor generates a driving force in at least part of a period outside a period during which the engine performs fuel combustion. Thus, a mechanical load disturbance attributable to the engine combustion is less likely to occur in the motor when at least one of a voltage value or a current value of the battery is acquired. Accordingly, when whether or not to permit a stop of engine idling is determined based on the at least one of the values, a determination error attributable to the engine combustion can be suppressed. This enables further downsizing of the battery while retaining an engine-starting performance.
(5) The engine control device according to any one of (1) to (4), wherein
   the engine includes a clutch that is switched between a transmission state in which a rotational force of the crankshaft is transmitted to a drive member of the vehicle and a non-transmission state where the rotational force is not transmitted, and
   the electric power supply unit is configured to perform a control for supplying electric power of the battery to the motor such that the motor generates a driving force in at least part of a period during which the clutch is in the non-transmission state where the rotational force is not transmitted within the deceleration period.
   In the engine control device of (5), while the clutch is in the non-transmission state, electric power of the battery is supplied to the motor so that the motor generates a driving force. This makes the electric power supply for detection of at least one of a voltage or a current less influential to vehicle traveling. Moreover, when electric power of the battery is supplied to the motor, a fluctuation in a mechanical load on the motor attributable to vehicle traveling can be suppressed. Thus, an error can be further suppressed in the determination based on a battery state. Accordingly, permission of a stop of idling can be determined with an improved accuracy. This enables further downsizing of the battery while retaining an engine-starting performance.
(6) The engine control device according to any one of (1) to (5), wherein
   the electric power supply unit is configured to perform a control for supplying electric power of the battery to the motor such that the motor generates a driving force in at least part of a period during which a rotation speed of the crankshaft is lower than a rotation speed of the crankshaft in the engine idling within the deceleration period.
   The engine control device of (6) can further shorten time intervals among a timing when a battery state is acquired, a timing when a determination about permission of a stop of idling is made, and a timing when shift to a state where engine idling is stopped is made. This enables further downsizing of the battery while retaining an engine-starting performance.
(7) The engine control device according to any one of (2) to (6), further including a stop condition determining unit that determines whether or not the idling stop condition is satisfied at a timing within the deceleration period, wherein
   the electric power supply unit is configured to perform a control for supplying electric power of the battery to the motor such that the motor generates a driving force in at least part of a period during which a rotation speed of the crankshaft is lower than a rotation speed of the crankshaft in the engine idling within the deceleration period and after the stop condition determining unit determines that the idling stop condition is satisfied.
   The engine control device of (7) can further shorten time intervals among a timing when a battery state is acquired, a timing when a determination about permission of a stop of idling is made, and a timing when shift to a state where engine idling is stopped is made. This enables further downsizing of the battery while retaining an engine-starting performance.
(8) The engine control device according to any one of (1) to (7), including a charge control unit configured to perform a control for charging the battery with electric power generated by the motor while the motor is driven by the engine.
   In the engine control device of (8), the motor is able to function as a generator. For example, unlike a motor that gets coupled to a crankshaft only at a time of starting, the motor functioning as the generator is in constant cooperation with the crankshaft. Accordingly, a configuration of causing the motor to generate a driving force by supplying electric power of the battery to the motor when the crankshaft is rotated can be provided by a simple structure.
(9) The engine control device according to (4), wherein
   the engine performs a combustion operation in which fuel combustion is repeated with intervals, and
   the electric power supply unit is configured to perform a control for supplying electric power of the battery to the motor such that the motor generates a driving force in at least part of a period outside a period during which the engine performs the fuel combustion in a combustion operation within the deceleration period.
   In the combustion operation of the engine, a fuel is supplied to the engine. In the combustion operation of the engine, fuel combustion is repeated with intervals. For example, in a combustion operation of a four-stroke engine, a combustion stroke (expansion stroke) is repeated with an exhaust stroke, an intake stroke, and a compression stroke interposed between combustion strokes. Compression top dead center exists between the compression stroke and the combustion stroke. A period during which fuel combustion occurs is, for example, a period from when fuel combustion starts at an ignition timing in the compression stroke to when the combustion ends during the expansion stroke after undergoing the compression top dead center. In other words, a period during which the fuel combustion occurs is a period composed of a downstream part of a compression stroke and an upstream part of an expansion stroke, the compression stroke and the expansion stroke being successive. In the engine control device of (9), electric power of the battery is supplied to the motor such that the motor generates a driving force in at least part of a period outside the period during which fuel combustion occurs. The period outside the period during which fuel combustion occurs is, for example, a period composed of a downstream part of an expansion stroke, an entire exhaust stroke, an entire intake stroke, and an upstream part of a compression stroke, the expansion stroke, the exhaust stroke, the intake stroke, and the compression stroke being successive. In at least part of the period outside the period during which fuel combustion occurs, electric power is supplied to the motor such that the motor generates a driving force.
   Thus, for example, even when the combustion operation having combustion repeated with intervals is performed, electric power of the battery is supplied to the motor in the period outside the period during which fuel combustion occurs in the combustion operation. This can suppress fluctuation in a mechanical load on the motor which may otherwise be caused by engine combustion, at a time of acquiring at least one of a voltage value or a current value of the battery. Accordingly, a determination error attributable to engine combustion can be suppressed in the determination of whether or not to permit a stop of engine idling based on the one value. This enables further downsizing of the battery while retaining an engine-starting performance.
(10) The engine control device according to (4), wherein
   the electric power supply unit is configured to perform a control for supplying electric power of the battery to the motor such that the motor generates a driving force in at least part of a period during which the combustion operation of the engine having fuel combustion repeated with intervals is stopped within the deceleration period.
   In the period during which the combustion operation is stopped, no fuel combustion occurs. For example, in the period during which the combustion operation is stopped, no combustion occurs even in the combustion stroke (expansion stroke).
   While the combustion operation of the engine is stopped, the vehicle normally keeps decelerating. The engine control device of (10), in which a battery state is acquired at such a timing, can further shorten time intervals among a timing when a battery state is acquired for the determination, a timing when the determination is made, and a timing when shift to a state where engine idling is stopped is made. In addition, no fuel combustion occurs in the engine at a time when electric power of the battery is supplied to the motor to acquire at least one of a voltage value or a current value of the battery. When the motor generates a driving force, therefore, fluctuation in a mechanical load on the motor which may be caused by the engine operation can be suppressed. Thus, an error can be suppressed in the determination based on a battery state. This enables further downsizing of the battery while retaining an engine-starting performance.
(11) The engine control device according to any one of (1) to (10), wherein
   the operation control unit determines whether or not to direct the motor to rotate the crankshaft in a direction reverse to a direction of forward rotation caused by a combustion operation of the engine after a stop of the engine idling, the determination being based on at least one of a voltage value or a current value of the battery.
   When the crankshaft is rotated at a time of engine start, the crankshaft undergoes a high-load region having a high rotation load and a low-load region. After a stop of engine idling, the crankshaft is rotated in a reverse direction, and then the crankshaft is rotated in a forward rotation direction, which makes it easy for the crankshaft to retain a rotation speed when reaching the high-load region. Thus, a small amount of electric power of the battery is required for the crankshaft to overcome the high-load region. The engine control device of (11) can enable downsizing of the battery while retaining an engine-starting performance by determining whether or not to rotate the crankshaft in the reverse direction based on at least one of a voltage value or a current value of the battery. Since a time interval between a timing when a battery state is acquired and a timing when a determination is made is short, the determination can be made with a high accuracy. This enables further downsizing of the battery while retaining an engine-starting performance.
(12) The engine control device according to any one of (1) to (10), wherein
   the operation control unit controls a rotation speed of the crankshaft at a time of directing the motor to rotate the crankshaft in a direction reverse to a direction of forward rotation caused by a combustion operation of the engine after a stop of the engine idling, the control being based on at least one of a voltage value or a current value of the battery.
   Energy of the crankshaft rotating in the reverse direction is due to a drive torque of the motor and an inertial force of the crankshaft. The drive torque of the motor depends on a current supplied to the motor. The drive torque of the motor, therefore, depends on electric power stored in the battery. The inertial force of the crankshaft depends on a rotation speed of the crankshaft. For example, the engine control device performs a control such that a rotation speed of the crankshaft increases as electric power stored in the battery is relatively smaller. The engine control device performs a control such that a rotation speed of the crankshaft decreases as electric power stored in the battery is relatively larger. This enables the crankshaft to be rotated in the reverse direction to a target position appropriate for starting with small electric power of the battery while reducing a risk that the crankshaft rotated in the reverse direction may overcome the high-load region. The engine control device of (12), in which a time interval between a timing when a battery state is acquired and a timing when a control is performed is short, can make a determination with a high accuracy. This enables further downsizing of the battery while retaining an engine-starting performance.
(13) The engine control device according to any one of (1) to (10), wherein
   the operation control unit controls a braking force at a time of directing the motor to stop rotation of the crankshaft in a direction reverse to a direction of forward rotation caused by a combustion operation of the engine after a stop of the engine idling, the control being based on at least one of a voltage value or a current value of the battery.
   For example, when the crankshaft is rotated in the reverse direction, a voltage corresponding to electric power of the battery is supplied to the motor, and thus the rotation speed of the crankshaft varies depending on the electric power of the battery. For example, the rotation speed of the crankshaft is higher as the electric power of the battery is larger. In the engine control device of (13), a braking force at a time of rotating the crankshaft in the reverse direction is controlled based on at least one of a voltage value or a current value of the battery. For example, the engine control device performs a control such that a braking force generated when the crankshaft is immediately before the target stop position increases as electric power stored in the battery is relatively larger. The engine control device also performs a control such that a braking force increases as electric power stored in the battery is relatively smaller. This enables the crankshaft to be rotated in the reverse direction to a target position appropriate for starting with small electric power of the battery while reducing a risk that the crankshaft rotated in the reverse direction may overcome the high-load region. The engine control device of (13), in which a time interval between a timing when a battery state is acquired and a timing when a control is performed is short, can make a determination with a high accuracy. This enables further downsizing of the battery while retaining an engine-starting performance.
(14) An engine unit including the engine control device according to any one of (1) to (13), the engine, and the motor, the engine unit being configured to be mounted on the vehicle.
   The engine unit of (14) can downsize the battery while retaining an engine-starting performance.
(15) A vehicle including the engine control device according to any one of (1) to (13), the engine, the motor, and the battery.

The vehicle of (15) can downsize the battery while retaining an engine-starting performance.

The terminology used herein is for defining particular embodiments only and is not intended to limit the teaching.

As used herein, the term "and/or" includes any and all combinations of one or more of the associated listed items.

As used herein, the terms "including", "comprising", or "having", and variations thereof specify the presence of stated features, steps, operations, elements, components, and/or equivalents thereof, and can include one or more of steps, operations, elements, components, and/or their groups.

As used herein, the terms "attached", "coupled", and/or equivalents thereof are used in a broad sense, and include both direct and indirect attachment and coupling unless otherwise specified.

Unless otherwise defined, all terms (including technical and scientific terms) used herein have the same meaning as commonly understood by one of ordinary skill in the art to which the present teaching belongs.

It will be further understood that terms, such as those defined in commonly used dictionaries, should be interpreted as having a meaning that is consistent with their meaning in the context of the present disclosure and relevant art and should not be interpreted in an idealized or overly formal sense unless expressly defined so herein.

It will be understood that the description of the present teaching discloses the number of techniques and steps.

Each of these has individual benefit and each can also be used in conjunction with one or more, or in some cases all, of the other disclosed techniques.

Accordingly, for the sake of clarity, this description will refrain from repeating every possible combination of the individual steps in an unnecessary fashion.

Nevertheless, Description and Claims should be read with the understanding that such combinations are entirely within the scope of the present teaching and the claims.

This Description describes a novel vehicle.

In the description given below, for the purposes of explanation, numerous specific details are set forth in order to provide a thorough understanding of the present teaching.

It will be apparent, however, that those skilled in the art may practice the present teaching without these specific details.

The present disclosure is to be considered as an exemplification of the present teaching, and is not intended to limit the present teaching to the specific embodiments illustrated by drawings or descriptions below.

The vehicle of the present teaching is a wheeled machine that transports persons or things. Examples of the vehicle include straddled vehicles. The straddled vehicle is a vehicle including a saddle-type seat. Examples of the straddled vehicle include motorcycles, motor tricycles, and ATVs (All-Terrain Vehicles). Examples of the vehicle include four-wheel vehicles.

The engine to which the engine control device according to the present teaching is applied includes the crankshaft. The engine receives a fuel supply, to perform a combustion operation. The engine includes a single-cylinder engine and a multi-cylinder engine. The engine includes an air-cooled engine and a water-cooled engine.

The battery to which the engine control device is applied stores electric power to be supplied to the motor. Examples of the battery include lead-acid batteries, lithium-ion batteries, and nickel-hydride batteries.

The motor to which the engine control device according to the present teaching is applied includes, for example, a motor configured to rotate the crankshaft at a time of engine start. In this case, a motor that receives an electric power supply from the battery in at least part of the deceleration period serves also as the motor for rotating the crankshaft at a time of engine start. Here, the motor that receives an electric power supply from the battery in at least part of the deceleration period may be separate from the motor for rotating the crankshaft at a time of engine start. The motor that receives an electric power supply from the battery in at least part of the deceleration period may be separate from a starting motor.

It may not be required that electric power supplied from the battery to the motor in at least part of the deceleration period be equal to electric power supplied from the battery to the motor at a time of engine restart. In other words, it may not be required that, for example, a torque target, a current target, or a voltage target that is set for the motor in the deceleration period be equal to a current target, or a voltage target that is set for the motor at a time of restart.

The motor to which the engine control device according to the present teaching is applied includes, for example, a motor functioning also as a generator and a motor not functioning as a generator.

A rotor included in the motor is connected to the crankshaft without interposition of either a speed ratio variable transmission or a speed ratio variable clutch, for example. That is, the rotor of the motor is connected to the crankshaft without interposition of a device capable of varying the input/output speed ratio. The rotor of the motor includes a rotor that is connected to the crankshaft with interposition of a power transmission mechanism and a rotor that is directly connected to the crankshaft. Examples of the power transmission mechanism include belts, chains, gears, speed reducers, and speed increasers.

The motor to which the engine control device according to the present teaching is applied includes a permanent magnet, for example. The motor includes a stator and a rotor, for example. The rotor of the motor includes a permanent magnet. The rotor of the motor includes no winding. The stator of the motor includes windings. The windings are stator windings. The motor includes windings corresponding to a plurality of phases. The motor may include windings corresponding to two phases, four phases, or more, for example. The motor, however, is able to easily perform controls when provided with windings corresponding to three phases, for example. The motor includes a motor of radial gap type and a motor of axial gap type. The motor, as the motor of radial gap type, includes a motor of outer rotor type and a motor of inner rotor type, the motor of outer rotor type provided with a rotor that rotates at a location outside a stator, the motor of inner rotor type provided with a rotor that rotates at a location inside a stator.

The battery state acquisition unit of the present teaching acquires a voltage value and a current value of the battery, for example. The battery state acquisition unit of the present teaching may acquire one of a voltage value or a current value of the battery, for example. The permission determining unit of the present teaching may determine whether or not to permit a stop of idling based on one of the acquired voltage or current values, for example. A configuration in which the battery state acquisition unit of the present teaching acquires both a voltage value and a current value of the battery and the electric power supply unit makes the determination based on both of the voltage value and the current value of the battery gives a higher accuracy to the determination. For example, the electric power supply unit makes the determination based on whether or not a voltage value and a current value of the battery are within a predetermined range of a map that indicates associated correspondence between voltage and current. The predetermined range is defined by an upper limit value of the current and a lower limit value of the voltage, for example. For example, the lower limit value of the voltage includes, for example, one value, and a value that is defined as a function of the current. The lower limit value of the voltage may be, for example, a value that decreases as the current increases. The lower limit value of the voltage may be, for example, a value that is independent of the current.

The electric power supply unit of the present teaching supplies electric power to the motor, the electric power allowing a driving force to be generated in a direction in which the motor is rotating, for example. That is, the electric power supply unit supplies electric power to the motor, the electric power allowing a driving force to be generated in a direction of forward rotation caused by the combustion operation of the engine. Alternatively, the electric power supply unit of the present teaching may supply electric power to the motor, the electric power allowing a driving force to be generated in a direction reverse to the rotation direction of the motor, for example. That is, the electric power supply unit may supply electric power to the motor, the electric power allowing a braking force to be generated on rotation of the crankshaft.

The deceleration period of the present teaching is a period during which the crankshaft is rotating without any acceleration of the vehicle from a time point when the vehicle starts to decelerate. A start point of the deceleration period is the time point when the vehicle starts to decelerate. An end point of the deceleration period may be, for example, a time point when the crankshaft stops rotation or a time point when the vehicle accelerates. The acceleration of the vehicle used herein is acceleration of the vehicle caused by a driver's operation, for example.

The deceleration period of the present teaching includes a period during which the vehicle is stopped, for example. That is, the deceleration period may include a period during which the crankshaft is rotating after the vehicle stops without any acceleration of the vehicle from the time point when the vehicle starts to decelerate.

The idling as used in the present teaching means a state where the engine operates without transmitting power for driving the vehicle. The idling is an engine combustion operation under a state where a driver's operation for acceleration is not performed. The idling is typically an engine combustion operation under a state where a driver's operation for acceleration is not performed while the vehicle is stopped. The rotation speed during idling is a rotation speed of the crankshaft under a state where a driver's operation for acceleration is not performed while the vehicle is stopped.

The deceleration period of the present teaching may include any one or a combination of the following states (a) to (c): (a) a period during which a rotation speed of the crankshaft is higher than the rotation speed during idling; (b) a period during which a rotation speed of the crankshaft is lower than the rotation speed during idling; and (c) a period during which a rotation speed of the crankshaft is the rotation speed during idling. In a case where the rotation speed during idling differs between a warm-up operation and a normal operation, whether a rotation speed of the crankshaft is higher or lower than an idling rotation speed is determined by using an idling rotation speed in each operation state as a criterion.

The electric power supply unit of the present teaching performs a control for supplying electric power of the battery to the motor such that the motor generates a driving force in at least part of the deceleration period. The electric power supply unit of the present teaching may perform the control such that the motor generates a driving force in the entire deceleration period, for example. No particular limitation is put on a period in which the electric power supply unit performs the control for supplying electric power of the battery to the motor. It is, however, preferable that the electric power supply unit supplies electric power of the battery to the motor such that the motor generates a driving force in a period shorter than a cycle of the engine combustion operation. This can suppress consumption of electric power of the battery. The cycle of the engine combustion operation is a cycle composed of an intake stroke, a compression stroke, an expansion stroke, and an exhaust stroke. Preferably, the electric power supply unit supplies electric power of the battery to the motor such that the motor generates a driving force in a period shorter than a crankshaft rotation cycle. This can make the motor less influential to the crankshaft rotation when at least one of a voltage value or a current value is acquired. A configuration in which the electric power supply unit supplies electric power of the battery to the motor such that the motor generates a driving force in a period shorter than a period required for 1/2 rotation of the crankshaft can make the motor still less influential to the crankshaft rotation while acquiring at least one of a voltage value or a current value of the battery necessary for the determination.

The battery state acquisition unit of the present teaching acquires at least one of a voltage value or a current value of the battery when electric power of the battery is supplied to the motor under a control that the electric power supply unit performs in at least part of the deceleration period. The battery state acquisition unit of the present teaching may acquire at least one of a voltage value or a current value of the battery in the entire deceleration period, for example.

The electric power supply unit of the present teaching may perform the control for supplying electric power of the battery to the motor all the time in the deceleration period, for example. The deceleration period may include a period during which the electric power supply unit does not perform the control for supplying electric power of the battery to the motor, for example. The battery state acquisition unit may acquire at least one of a voltage value or a current value of the battery, for example.

The acceleration operator of the present teaching may be configured to instruct that the vehicle is accelerated in accordance with a driver's operation. A specific configuration of the acceleration operator is not particularly limited. Examples of the acceleration operator include accelerator grips and accelerator pedals. The period during which the acceleration instruction from the acceleration operator is stopped is, for example, a period during which an operation that instructs acceleration is not performed. The period during which the acceleration instruction from the acceleration operator is stopped is, for example, a period during which the amount of operation on the acceleration operator is zero. The period during which the acceleration instruction from the acceleration operator is stopped is, for example, a period during which a sensor for detecting the amount of operation on the acceleration operator detects that the amount of operation is zero. Examples of the sensor include a sensor attached to the acceleration operator and a sensor configured to detect a state of a portion that is displaced in accordance with the operation on the acceleration operator. Examples of the sensor include a sensor configured to detect the degree of opening of a throttle valve that is operated in accordance with the operation on the acceleration operator.

The engine combustion operation of the present teaching is an operation in which the engine rotates the crankshaft by repeating fuel combustion with intervals. In the engine combustion operation, a period in which fuel combustion occurs and a period in which no fuel combustion occurs are repeated alternately. A period except the period in which fuel combustion occurs corresponds to the period in which no fuel combustion occurs.

The operation control unit of the present teaching controls the motor in relation to starting after a stop of engine idling, for example. In starting after a stop of engine idling, the control device directs the motor to rotate the crankshaft in the forward rotation direction. Rotation of the crankshaft in the reverse direction is implemented after the stop of idling and before the rotation of the crankshaft in the forward rotation direction. For example, after a stop of idling and before satisfaction of a restart condition, the operation control unit directs the motor to rotate the crankshaft in the reverse direction to make the crankshaft stop at a target position. A control performed by the operation control unit is not limited to this. For example, the operation control unit directs the motor to rotate the crankshaft in the reverse direction after a stop of idling and after satisfaction of the restart condition. In such a case, the operation control unit directs the motor to switch rotation of the crankshaft to forward rotation if the crankshaft rotated in the reverse direction reaches a target position. The operation control unit may implement the rotation of the crankshaft in the reverse direction as a part of engine starting.

Examples of the clutch of the present teaching include a manual clutch whose state is directly switched by a driver's operation, a centrifugal clutch, and an electromagnetic clutch. The electric power supply unit or the permission determining unit of the engine control device may directly detect a state of the clutch. When, for example, the clutch is a centrifugal clutch, the electric power supply unit or the permission determining unit of the engine control device may detect a state of the clutch based on a rotation speed of the crankshaft.

The drive member of the present teaching is a member that receives a rotational power outputted from the engine, to drive the vehicle. Examples of the drive member include a wheel.

### Advantageous Effects of Invention

The present teaching enables downsizing of a battery while retaining an engine-starting performance.

### Brief Description of Drawings

[FIG. 1] A diagram showing an external appearance of a vehicle equipped with an engine control device according to a first embodiment of the present teaching.
[FIG. 2] A partial cross-sectional view schematically showing an outline configuration of an engine shown in FIG. 1.
[FIG. 3] A block diagram showing an outline electrical configuration of the vehicle shown in FIG. 1.
[FIG. 4] A flowchart illustrating operations of the engine control device.
[FIG. 5] A graph showing characteristics of a crankshaft rotation speed relative to a vehicle speed in the vehicle shown in FIG. 1.
[FIG. 6] A timing chart showing an engine state transition under control by the engine control device shown in FIG. 3.
[FIG. 7] A flowchart illustrating operations of an engine control device according to a second embodiment of the present teaching.
[FIG. 8] A timing chart showing an engine state transition under control by the engine control device according to the second embodiment.
[FIG. 9] A graph showing a voltage-current map used for determining whether or not to permit a stop of idling.

### Description of Embodiments

In the following, the present teaching will be described based on some preferred embodiments with reference to the drawings.

### [First Embodiment]

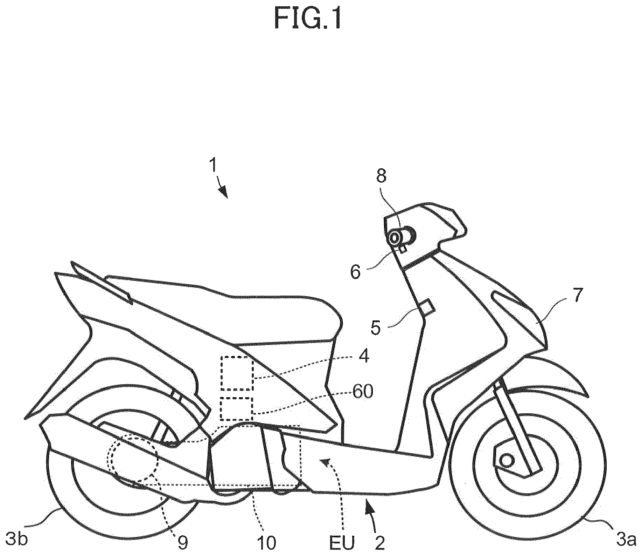

FIG. 1 is a diagram showing an external appearance of a vehicle equipped with an engine control device according to a first embodiment of the present teaching.

A vehicle 1 shown in FIG. 1 includes a vehicle body 2 and wheels 3a, 3b. Specifically, the vehicle 1 is a straddled vehicle. The vehicle 1 is a motorcycle.

The vehicle 1 includes an engine unit EU. The vehicle 1 also includes a battery 4. The engine unit EU is mounted on the vehicle 1.

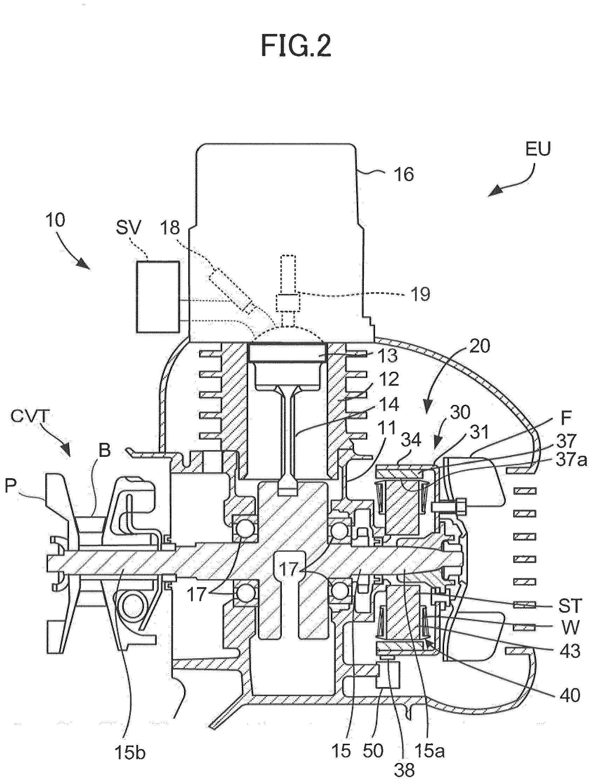

The engine unit EU includes an engine 10, a motor 20 (see FIG. 2), and an engine control device 60. That is, the vehicle 1 includes the engine 10, the motor 20, and the engine control device 60. The vehicle 1 is driven by the engine 10. A rotational force outputted from the engine 10 causes the vehicle 1 to travel.

The engine 10 of this embodiment includes a clutch 9. The clutch 9 is switched between a transmission state in which a rotational force of a crankshaft 15 (see FIG. 2) included in the engine 10 is transmitted to the wheel 3b and a non-transmission state where the rotational force is not transmitted. The rotational force of the crankshaft 15 is transmitted to the clutch 9 through a transmission CVT (see FIG. 2). The clutch 9 is a centrifugal clutch. Hereinafter, the clutch 9 may be also referred to as centrifugal clutch 9. If a rotation speed of the crankshaft 15 exceeds a predetermined connection speed, the centrifugal clutch 9 is brought into a transmission state in which rotation is transmitted to the wheel 3b. By receiving rotational power outputted from the engine 10, the wheel 3b drives the vehicle 1. If the rotation speed of the crankshaft 15 falls below a predetermined disconnection speed, the centrifugal clutch 9 is brought into a non-transmission state in which transmission of rotation to the wheel 3b is disconnected. The vehicle 1 includes a speed sensor (not shown).

The vehicle 1 includes a main switch 5. The main switch 5 is a switch for supplying electric power to each part of the vehicle 1. The vehicle 1 includes a starter switch 6. The starter switch 6 is a switch for starting the engine 10. The vehicle 1 includes an acceleration operator 8. The acceleration operator 8 is an operation element for instructing that the vehicle 1 be accelerated in accordance with an operation performed thereon by a driver. The vehicle 1 includes a headlight 7.

FIG. 2 is a partial cross-sectional view schematically showing an outline configuration of the engine 10 shown in FIG. 1. FIG. 2 shows a part of the engine 10 of this embodiment.

The engine 10 includes the crankshaft 15. The engine 10 includes a crankcase 11, a cylinder 12, a piston 13, and a connecting rod 14. The piston 13 is disposed in the cylinder 12 such that the piston 13 is movable to and fro.

The crankshaft 15 is rotatably disposed in the crankcase 11. The connecting rod 14 connects the piston 13 and the crankshaft 15 to each other. A cylinder head 16 is attached to an upper portion of the cylinder 12. The cylinder 12, the cylinder head 16, and the piston 13 define a combustion chamber. The crankshaft 15 is supported on the crankcase 11 via a pair of bearings 17 in a rotatable manner. The motor 20 is attached to a first end portion 15a of the crankshaft 15. A continuously variable transmission CVT is attached to a second end portion 15b of the crankshaft 15. FIG. 2 shows a primary pulley P and a belt B of the continuously variable transmission CVT. The belt B is wrapped around the primary pulley P and a secondary pulley (not shown). The secondary pulley (not shown) is connected to the centrifugal clutch 9 (see FIG. 1). The engine 10 outputs a rotational force via the crankshaft 15. A rotational force of the crankshaft 15 is transmitted to the wheel 3b (see FIG. 1) through the continuously variable transmission CVT and the centrifugal clutch 9 (see FIG. 1).

The engine 10 is provided with a throttle valve SV and a fuel injector device 18. The throttle valve SV adjusts the amount of air to be supplied to the combustion chamber. The degree of opening of the throttle valve SV is adjusted in accordance with an operation on the acceleration operator 8 (see FIG. 1). The fuel injector device 18 injects a fuel, to supply the fuel to the combustion chamber. The engine 10 is also provided with a spark plug 19.

The engine 10 outputs a rotational force by combusting a fuel. The rotational force outputted from the engine 10 is regulated in accordance with the degree of opening of the throttle valve SV.

The engine 10 of this embodiment is a single-cylinder four-stroke engine. The engine 10 of this embodiment is an air-cooled engine. The engine 10 may be a water-cooled engine. The engine 10 may be a multi-cylinder engine. Examples of the multi-cylinder engine include a straight double-cylinder engine, a parallel double-cylinder engine, a V-type double-cylinder engine, a horizontal opposed double-cylinder engine, and the like. The number of cylinders included in the multi-cylinder engine is not particularly limited. For example, the engine 10 may be an engine including three or more cylinders.

The engine 10 has, during four strokes, a high-load region in which a high load is put on rotation of the crankshaft 15 and a low-load region in which a load put on rotation of the crankshaft 15 is lower than that of the high-load region. The high-load region means a region in one combustion cycle of the single-cylinder engine 10 where a load torque is higher than an average value Av of the load torque over the one combustion cycle. From the viewpoint of the rotation angle of the crankshaft 15, the low-load region is wider than the high-load region. More specifically, a low-load region TL is wider than a high-load region TH. In other words, a rotation angle region corresponding to the low-load region TL is wider than a rotation angle region corresponding to the high-load region TH. In a combustion operation, the engine 10 makes forward rotation while repeating four strokes, namely, an intake stroke, a compression stroke, an expansion stroke, and an exhaust stroke. The compression stroke overlaps the high-load region.

In a case of performing the combustion operation, the engine 10 combusts a fuel in the expansion stroke, that is, in a combustion stroke. In the combustion operation, a period having fuel combustion and a period having no fuel combustion are repeated. Thus, the engine 10 repeats fuel combustion with intervals. In a case where the combustion operation is stopped, no combustion occurs, even in the expansion stroke.

The motor 20 is a three-phase brushless motor of permanent magnet type. The motor 20 also functions as a three-phase brushless generator of permanent magnet type. Here, stator windings of the motor 20 may be of two-phase, four-phase, or more.

The motor 20 includes a rotor 30 and a stator 40. The motor 20 of this embodiment is of radial gap type. The motor 20 is of outer rotor type. That is, the rotor 30 is an outer rotor. The stator 40 is an inner stator.

The rotor 30 includes a rotor body part 31. The rotor body part 31 is made of, for example, a ferromagnetic material. The rotor body part 31 is in the shape of a bottomed cylinder. The rotor body part 31 is fixed to the crankshaft 15. The rotor 30 is not provided with a winding to which a current is supplied.

The rotor 30 includes a permanent magnet part 37. The rotor 30 includes a plurality of magnetic pole portions 37a. The plurality of magnetic pole portions 37a are formed by the permanent magnet part 37. The plurality of magnetic pole portions 37a are provided on an inner circumferential surface of a back yoke part 34. In this embodiment, the permanent magnet part 37 includes a plurality of permanent magnets. The plurality of magnetic pole portions 37a are provided in the plurality of permanent magnets, respectively.

Alternatively, the permanent magnet part 37 may be configured as a single annular permanent magnet. In such a configuration, the single permanent magnet is magnetized such that the plurality of magnetic pole portions 37a appear side by side on the inner circumferential surface.

The plurality of magnetic pole portions 37a are provided such that N pole and S pole appear alternately with respect to a circumferential direction of the motor 20. In this embodiment, the number of magnetic poles of the rotor 30 opposed to the stator 40 is twenty-four. The number of magnetic poles of the rotor 30 means the number of magnetic poles opposed to the stator 40. No magnetic element is disposed between the magnetic pole portions 37a and the stator 40.

The magnetic pole portions 37a are provided outside the stator 40 with respect to a radial direction of the motor 20. The back yoke part 34 is provided outside the magnetic pole portions 37a with respect to the radial direction. The number of magnetic pole portions 37a included in the motor 20 is more than the number of teeth 43.

The rotor 30 of this embodiment is of surface permanent magnet type (SPM type) in which the magnetic pole portions 37a are exposed from a magnetic material. The rotor 30 may be of interior permanent magnet type (IPM type) in which the magnetic pole portions 37a are embedded in a magnetic material. The rotor 30 is provided with a cooling fan F.

The stator 40 includes a stator core ST and a plurality of stator windings W. The stator core ST includes a plurality of teeth 43 arranged at intervals with respect to the circumferential direction. The plurality of teeth 43 integrally extend from the stator core ST toward radially outside. In this embodiment, eighteen teeth 43 in total are arranged at intervals with respect to the circumferential direction.

The stator winding W is wound around each of the teeth 43. That is, the multi-phase stator windings W are disposed through slots. Each of the multi-phase stator windings W belongs to any of U-phase, V-phase, and W-phase. The stator windings W are arranged in the order of U-phase, V-phase, and W-phase, for example. A manner in which the stator winding W is wound may be, though not particularly limited, either concentrated winding or distributed winding, and it preferably is concentrated winding.

The rotor 30 includes, on its outer surface, a plurality of detection object parts 38 for detection of a rotation position of the rotor 30. Magnetic effects are used to detect the plurality of detection object parts 38. The plurality of detection object parts 38 arranged at intervals with respect to the circumferential direction are provided on the outer surface of the rotor 30. The detection object parts 38 are made of a ferromagnetic material.

A rotor position detection device 50 is a device that detects the position of the rotor 30. The rotor position detection device 50 is provided at a position allowed to be opposed to the plurality of detection object parts 38. The rotor position detection device 50 detects passage of the detection object part 38 along with rotation of the rotor 30. Thus, a rotation speed of the rotor 30 is detected. The rotor position detection device 50 supplies a detection result to the engine control device 60 (see FIG. 1).

The motor 20 is connected to the crankshaft 15 of the engine 10. More specifically, the motor 20 is connected to the crankshaft 15 such that the rotor 30 is rotated with a fixed speed ratio relative to the crankshaft 15.

The motor 20 functions as a generator. In more detail, the motor 20 functions as a starter generator. The motor 20 is configured to be in constant cooperation with the crankshaft 15. When the crankshaft 15 is rotated, therefore, it is possible to cause the motor 20 to generate a driving force by supplying electric power of the battery 4 to the motor 20.

In this embodiment, the rotor 30 is attached to the crankshaft 15 without interposition of a power transmission mechanism (such as a belt, a chain, a gear, a speed reducer, or a speed increaser). The rotor 30 is rotated with a speed ratio of 1:1 relative to the crankshaft 15. The motor 20 is configured to causes forward rotation of the crankshaft 15 by forward rotation of the engine 10.

Here, it may be acceptable that the motor 20 is attached to the crankshaft 15 with interposition of a power transmission mechanism. In this respect, however, the motor 20 is connected to the crankshaft 15 without interposition of either a speed ratio variable transmission or a speed ratio variable clutch. That is, the motor 20 is connected to the crankshaft 15 without interposition of a device capable of varying the input/output speed ratio.

In the present teaching, it is preferable that the rotation axis of the motor 20 is substantially coincident with the rotation axis of the crankshaft 15. It is preferable that the motor 20 is attached to the crankshaft 15 without interposition of any power transmission mechanism, as illustrated in this embodiment.

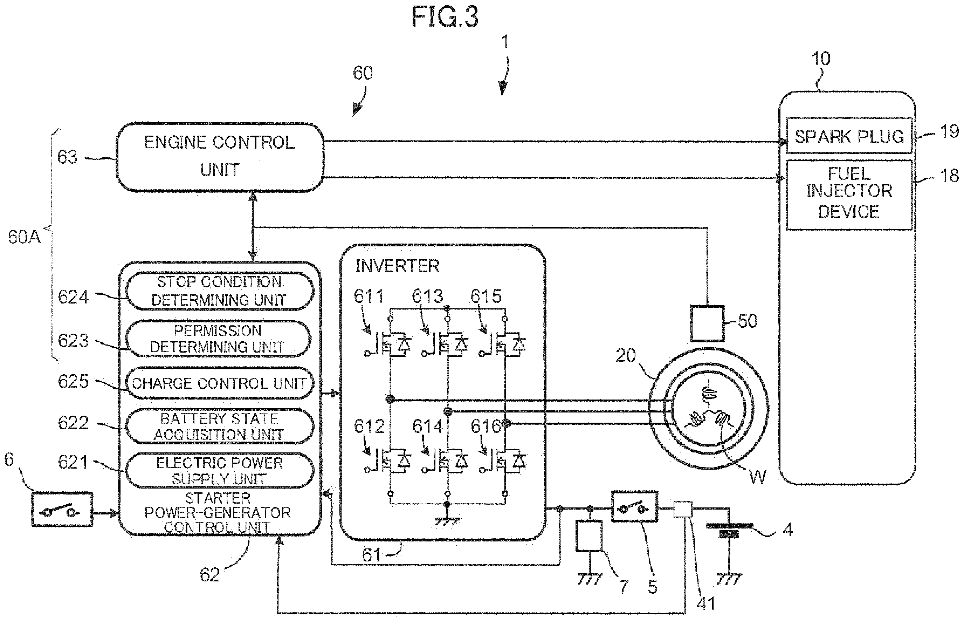

The motor 20 is configured to rotationally drive the crankshaft 15 of the engine 10. At a time of engine start, the motor 20 drives the crankshaft 15 in forward rotation, to start the engine 10. While the engine 10 is in the combustion operation, the motor 20 is driven by the engine 10, to generate electric power. The electric power that is generated by the motor while the motor 20 is driven by the engine 10 charges the battery 4 (see FIG. 1 and FIG. 3). Thus, the motor 20 has both a function for driving the crankshaft 15 in forward rotation to start the engine 10 and a function for being driven by the engine 10 to generate electric power in the combustion operation of the engine 10. In at least part of a time period following the start of the engine 10, the motor 20 is driven in forward rotation by the crankshaft 15, to function as a generator. In other words, in a case of the motor 20 functioning as a generator, it is not always necessary that the motor 20 functions as the generator all the time after the start of an engine combustion. It may be acceptable that a period in which the motor 20 functions as a generator and a period in which the motor 20 functions as a vehicle driving motor are present after the start of an engine combustion.

In the vehicle 1 of this embodiment, a member that transmits rotational power from the engine to the wheel 3b is provided only with the motor 20 serving as a device for conversion between rotational power and electric power in relation to driving of the wheel 3b. The vehicle of the present teaching, however, is not limited to this. A device for conversion between rotational power and electric power other than the motor may be connected to the member that transmits rotational power from the engine to a drive member.

FIG. 3 is a block diagram showing an outline electrical configuration of the vehicle 1 shown in FIG. 1.

The vehicle 1 includes the engine control device 60. The engine control device 60 controls each part of the vehicle 1. The engine control device 60 includes an inverter 61 and a later-described computer.

The motor 20 and the battery 4 are connected to the inverter 61. The battery 4 supplies and receives a current to and from the motor 20. The battery 4 stores electric power to be supplied to the motor 20. A current voltage detector 41 that detects a voltage of the battery 4 and a current flowing from the battery 4 is connected to the battery 4. The current voltage detector 41 includes, for example, a shunt resistor that causes a voltage drop in accordance with a current. Alternatively, the current voltage detector 41 may include, for example, a magnetic sensor that electromagnetically detects a current. The headlight 7 is also connected to the inverter 61 and to the battery 4. The headlight 7 is one example of an accessory mounted on the vehicle 1, the accessory consuming electric power when operating.

The inverter 61 includes a plurality of switching parts 611 to 616. In this embodiment, the inverter 61 includes six switching parts 611 to 616.

The switching parts 611 to 616 constitute a three-phase bridge inverter.

The plurality of switching parts 611 to 616 are connected to the respective phases of the multi-phase stator windings W.

More specifically, among the plurality of switching parts 611 to 616, every two switching parts that are connected in series constitute a half bridge. The inverter 61 has half bridges each corresponding to each phase of the multi-phase stator windings W. The plurality of half bridges are connected to the respective phases of the multi-phase stator windings W.

The switching parts 611 to 616 selectively allow or do not allow the passage of a current between the multi-phase stator windings W and the battery 4.

In more detail, when the motor 20 functions as a motor, switching between causing and stopping conduction of each of the multi-phase stator windings W is implemented by on/off-operation of the switching parts 611 to 616.

When the motor 20 functions as a generator, switching between allowing and not allowing the passage of a current between each of the stator windings W and the battery 4 is implemented by on/off-operation of the switching parts 611 to 616. By switching on/off the switching parts 611 to 616 one after another, a control of a voltage and a rectification of a three-phase AC outputted from the motor 20 are performed.

Each of the switching parts 611 to 616 has a switching element. The switching element is, for example, a transistor and in more detail, an FET (Field Effect Transistor). Here, instead of FETs, for example, thyristors and IGBTs (Insulated Gate Bipolar Transistors) are adoptable as the switching parts 611 to 616.

The fuel injector device 18 and the spark plug 19 are connected to the engine control device 60.

The engine control device 60 includes a starter power-generator control unit 62 and an engine control unit 63. More specifically, the engine control device 60 of this embodiment includes the starter power-generator control unit 62 and the inverter 61.

The starter power-generator control unit 62 controls on/off-operation of each of the switching parts 611 to 616, to control operations of the motor 20. The starter power-generator control unit 62 includes an electric power supply unit 621, a battery state acquisition unit 622, and a permission determining unit 623. That is, the engine control device 60 includes the electric power supply unit 621, the battery state acquisition unit 622, the permission determining unit 623, and the engine control unit 63. The engine control device 60 also includes a stop condition determining unit 624. The engine control device 60 also includes a charge control unit 625. The engine control device 60 also includes an operation control unit 60A. The operation control unit 60A includes the engine control unit 63, the permission determining unit 623, and the stop condition determining unit 624. The operation control unit 60A performs controls concerning a start after a stop of idling.

The engine control device 60 is composed of a computer including a central processing unit (not shown) and a storage device (not shown). The central processing unit executes arithmetic processing based on a control program. The storage device stores data relating to programs and arithmetic operations.

The engine control unit 63 and the starter power-generator control unit 62 including the electric power supply unit 621, the battery state acquisition unit 622, the permission determining unit 623, the stop condition determining unit 624, and the charge control unit 625 are implemented by a computer (not shown) and a control program executable by the computer. Thus, below-described operations performed respectively by the electric power supply unit 621, the battery state acquisition unit 622, the permission determining unit 623, the stop condition determining unit 624, the charge control unit 625, and the engine control unit 63 can be considered as operations performed by the engine control device 60. Operations performed by the engine control unit 63, the permission determining unit 623, and the stop condition determining unit 624 can be considered as operations performed by the operation control unit 60A. The starter power-generator control unit 62 and the engine control unit 63 may be, for example, either configured as separate devices placed at a distance from each other, or integrated as a single device.

The engine control unit 63 controls the spark plug 19 and the fuel injector device 18, to control the combustion operation of the engine 10. The engine control unit 63 controls idling of the engine 10. More specifically, the engine control unit 63 controls a stop of idling of the engine 10 and a prohibition on the stop of idling. The engine control unit 63 also controls a rotational force of the engine 10. The electric power supply unit 621 performs a control for supplying electric power of the battery 4 to the motor 20. The battery state acquisition unit 622 acquires a voltage value and a current value of the battery 4 when electric power of the battery 4 is supplied to the motor 20. The permission determining unit 623 determines whether or not to permit a stop of idling. The stop condition determining unit 624 determines whether or not an idling stop condition is satisfied. The charge control unit 625 directs the motor 20 to generate electric power, and charges the battery 4 with the generated electric power.

The starter switch 6 is connected to the engine control device 60. The starter switch 6 is operated by a driver at a time of starting the engine 10.

The inverter 61, the starter power-generator control unit 62, and the engine control unit 63 of the engine control device 60 control the engine 10 and the motor 20.

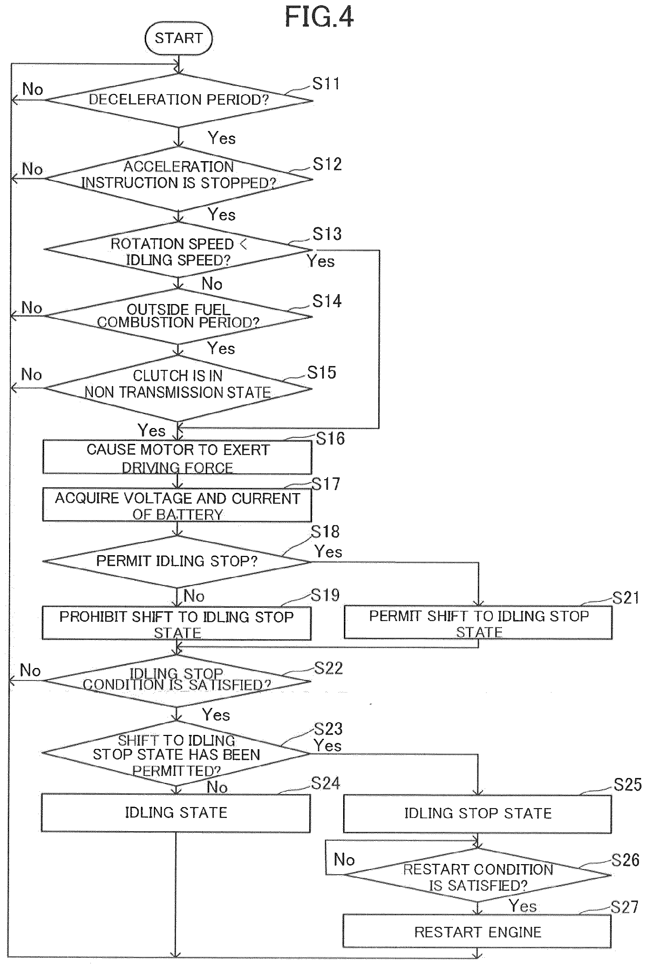

FIG. 4 is a flowchart illustrating operations of the engine control device 60.

Operations of the engine control device 60 will be described with reference to FIG. 3 and FIG. 4.

The operations illustrated in FIG. 4 are started while the vehicle is traveling. In controlling the engine 10, the electric power supply unit 621 of the operation control unit 60A in the engine control device 60 determines whether or not the crankshaft 15 is in a deceleration period (S11).

The deceleration period means a period during which the crankshaft 15 is rotating without any acceleration of the vehicle 1 from a time point when the vehicle 1 starts to decelerate. The deceleration period is a period in which the vehicle 1 is intermittently or continuously decelerating. In the deceleration period, the vehicle 1 may alternate between traveling at a constant speed and deceleration, without any acceleration. In the deceleration period, the vehicle 1 may perform only deceleration, without any acceleration or constant-speed traveling. The electric power supply unit 621 acquires a speed of the vehicle 1 from the speed sensor (not shown).

The electric power supply unit 621 acquires a rotation speed of the crankshaft 15 based on a result of detection of the detection object parts 38 (see FIG. 2) by the rotor position detection device 50. The electric power supply unit 621 determines whether or not it currently is in the deceleration period, based on a result of speed detection by the speed sensor (not shown) provided in the vehicle 1.

A determination about deceleration of the vehicle 1 is implemented by, for example, storing a detected speed value in the storage device (not shown) and comparing a speed obtained as a result of current detection against a speed stored in the past.

If it currently is in the deceleration period (S11:Yes), the electric power supply unit 621 determines whether or not it currently is a timing for causing the motor 20 to generate a driving force (S12 to S15). If the determination results that it currently is a timing for causing the motor 20 to generate a driving force, the electric power supply unit 621 performs the control for supplying electric power of the battery 4 to the motor 20 such that the motor 20 generates a driving force (S16). The electric power supply unit 621 supplies electric power of the battery 4 to the motor 20 such that the motor 20 generates a driving force, the supply being conducted for a period shorter than a period taken for one rotation of the crankshaft 15, for example. For less consumption of the battery 4, it can be conceivable that the period for which the electric power supply unit 621 supplies electric power such that the motor 20 generates a driving force is set shorter than a crankshaft rotation cycle. It can be also conceivable that the period for which electric power is supplied is set shorter than a period required for 1/2 rotation of the crankshaft.

In step S12, as the determination of whether or not it currently is the timing for causing the motor 20 to generate a driving force, the electric power supply unit 621 determines whether or not an acceleration instruction from the acceleration operator 8 is stopped. If an operation for instructing acceleration is not performed on the acceleration operator 8, the acceleration instruction from the acceleration operator 8 is stopped. Along with an operation on the acceleration operator 8, the throttle valve SV (see FIG. 2) is operated. A closed state of the throttle valve SV indicates a state where the operation for instructing acceleration is not performed on the acceleration operator 8. The closed state of the throttle valve SV is not limited to a state where an air supply to the combustion chamber of the engine 10 (see FIG. 2) is completely stopped. The closed state of the throttle valve SV includes, for example, a state where the throttle valve SV is opened to such a degree that the engine 10 is allowed to continue idling. The electric power supply unit 621 makes the determination about the acceleration instruction from the acceleration operator 8, based on a detection result obtained by an opening degree sensor which is provided to the throttle valve SV, for example.

In the deceleration period (S11:Yes), if the acceleration instruction from the acceleration operator 8 is stopped (S12:Yes), the electric power supply unit 621 makes a next determination for causing the motor 20 to generate a driving force, that is, a determination of whether or not a rotation speed of the crankshaft 15 is lower than an idling rotation speed (S13). The idling rotation speed means a rotation speed of the crankshaft 15 during idling of the engine 10. The idling rotation speed is a rotation speed obtained in an idling state where the engine 10 operates without transmitting power for driving the vehicle. The idling rotation speed is lower than a rotation speed of the crankshaft 15 obtained when the centrifugal clutch 9 is in the transmission state.

If a rotation speed of the crankshaft 15 is lower than the idling rotation speed (S13:Yes), the electric power supply unit 621 causes the motor 20 to generate a driving force (S16).

If a rotation speed of the crankshaft 15 is equal to or higher than the idling rotation speed (S13:No), the electric power supply unit 621 makes a next determination for causing the motor 20 to generate a driving force (S14).

The electric power supply unit 621 makes the next determination for causing the motor 20 to generate a driving force, that is, a determination of whether or not it currently is outside a period in which the engine 10 performs fuel combustion (S14).

In step S14, for determining whether or not it currently is outside the period in which the engine 10 performs fuel combustion, the electric power supply unit 621 determines whether or not the engine 10 is in a stroke other than the combustion stroke (expansion stroke). In the combustion operation of the engine 10, the expansion stroke, the exhaust stroke, the intake stroke, and the compression stroke are repeated. The engine control unit 63 operates the spark plug 19 and the fuel injector device 18 in accordance with strokes. To be more specific, in step S14, the electric power supply unit 621 determines whether or not it currently is in a period from when the engine 10 starts fuel combustion at an ignition timing within the compression stroke to when the combustion ends during the expansion stroke after undergoing compression top dead center.

The determination in step S14 of whether or not it currently is outside the period in which the engine 10 performs fuel combustion can be implemented by directly determining whether or not the combustion operation of the engine 10 is stopped, instead of determining whether or not the engine 10 is in a stroke other than the combustion stroke. In such a configuration, the electric power supply unit 621 determines whether or not the engine control unit 63 has stopped an operation control on the spark plug 19 and the fuel injector device 18, to determine whether or not the combustion operation is stopped.

If it currently is outside the period in which the engine 10 performs fuel combustion (S14:Yes), the electric power supply unit 621 makes a next determination for causing the motor 20 to generate a driving force, that is, a determination of whether or not the clutch 9 is in the non-transmission state (S15). The clutch 9 is the centrifugal clutch 9. A reduction in the rotation speed of the crankshaft 15 brings the centrifugal clutch 9 into the non-transmission state. More specifically, the centrifugal clutch 9 is in the non-transmission state when the rotation speed of the crankshaft 15 is lower than a predetermined threshold. A value higher than the rotation speed during idling is set as the predetermined threshold. The non-transmission state of the centrifugal clutch 9 is a state in which transmission of rotation is completely disconnected. The non-transmission state of the centrifugal clutch 9, however, does not always need to be the state where transmission of rotation is completely disconnected, but may include a state where rotation is not completely transmitted. The determination of whether or not the centrifugal clutch 9 is in the non-transmission state is implemented by determining whether or not the rotation speed of the crankshaft 15 is lower than the predetermined threshold. Alternatively, the determination of whether or not the centrifugal clutch 9 is in the non-transmission state may be implemented by directly detecting a transmission state of the centrifugal clutch 9.

If the clutch 9 is in the non-transmission state (S15:Yes), the electric power supply unit 621 performs the control for supplying electric power of the battery 4 to the motor 20 such that the motor 20 generates a driving force (S16).

In a case where the electric power supply unit 621 performs the control for supplying electric power of the battery 4 to the motor 20 in step S16, the electric power supply unit 621 performs a control that directs the motor 20 to accelerate or decelerate the crankshaft 15, thus causing the motor 20 to generate a driving force.

The electric power supply unit 621, for example, performs a control that directs the motor 20 to accelerate forward rotation of the crankshaft 15, thus causing the motor 20 to generate a driving force.

Forward rotation of the crankshaft 15 is a rotation of the crankshaft 15 in the combustion operation of the engine 10. A specific control on the switching parts 611 to 616 is, for example, a vector control. The vector control scheme is a control method in which a current flowing in each stator winding W of the motor 20 is divided into d-axis component and q-axis component, the d-axis component corresponding to a magnetic flux direction of the magnetic pole portion 37a, the q-axis component being orthogonal to the magnetic flux direction in terms of electrical angle. Adjusting a direction (positive/negative) of a d-axis component current which corresponds to a torque of the motor 20 can generate a driving force so as to accelerate the crankshaft 15. A specific control on the switching parts 611 to 616 is not limited to the vector control scheme. For example, the control may be a drive control based on 120-degree conduction.

In step S16, it may be also possible that the electric power supply unit 621 directs the motor 20 to decelerate the crankshaft 15, for example. In this case, the electric power supply unit 621 controls on/off-operation of each of the switching parts 611 to 616 such that the motor 20 generates a driving force in a direction reverse to rotation of the crankshaft 15. This makes the motor 20 function as a brake on forward rotation of the crankshaft 15. In this case as well, a current flows from a positive electrode of the battery 4 toward the motor 20 (inverter 61). This means that the battery 4 is in a discharge state. That is, the electric power supply unit 621 directs the battery 4 to discharge.

Under the control in step S16 mentioned above, electric power of the battery 4 is supplied to the motor 20, and at this time, the battery state acquisition unit 622 acquires a voltage value and a current value of the battery 4 (S17). The battery state acquisition unit 622 acquires a voltage value and a current value of the battery 4 based on a detection result outputted from the current voltage detector 41. The battery state acquisition unit 622 acquires a voltage value and a current value of the battery 4, as an index indicative of a state of the battery 4.

Then, the permission determining unit 623 determines whether or not to permit a stop of idling of the engine 10 (S18). The permission determining unit 623 makes the determination based on the voltage value and the current value of the battery 4 which are acquired by the battery state acquisition unit 622 in step S17 mentioned above at a time when electric power of the battery 4 is supplied to the motor 20 in step S16 mentioned above.

In step S18, the permission determining unit 623 determines an ability of the battery 4 based on the voltage value and the current value. More specifically, the permission determining unit 623 determines whether or not the battery 4 has a sufficient ability to restart the engine 10 from a rotation stop state of the crankshaft 15.

In step S18 described above, for example, the permission determining unit 623 calculates an internal resistance of the battery 4 from the voltage value and the current value.

As the battery 4 deteriorates, the capacity of the battery 4 which means the amount of electric power that can be stored in the battery 4 decreases. That is, the amount of electric power that can be stored in and discharged from the battery 4 decreases. Thus, the amount of electric power that can be supplied from the battery 4 to the motor 20 at a time of, for example, starting the engine 10 decreases.

The internal resistance of the battery 4 is highly correlated with the degree of deterioration of the battery 4. If the internal resistance of the battery 4 is higher than a predetermined threshold, the permission determining unit 623 determines that the battery 4 is not able to supply electric power sufficient for starting the engine 10, and thus does not permit a stop of idling (S18:No). If the internal resistance of the battery 4 is lower than a predetermined threshold, the permission determining unit 623 determines that the battery 4 is able to supply electric power sufficient for starting the engine 10, and thus permits a stop of idling (S18:Yes).

A voltage of the battery 4 is correlated with the amount of electric power that is actually stored in the battery 4. A voltage of the battery 4, however, varies depending on the magnitude of a current. In some cases, the battery 4 may output a current to an accessory, such as the headlight 7. Thus, a determination based on the amount of electric power that is actually stored in the battery 4 is likely to be influenced by whether or not a current is outputted to an accessory, such as the headlight 7.

In this embodiment, when electric power of the battery 4 is supplied to the motor 20, a current is outputted from the battery 4, the current being similar to a current at a time of starting the engine 10. In this embodiment, for example, when electric power of the battery 4 is supplied to the motor 20, a current outputted from the battery 4 is larger than a current flowing in the headlight 7 for example. Accordingly, a determination based on a voltage of the battery 4 can be made under a state where an influence of whether or not a current flows in the headlight 7 is relatively reduced. In addition, a determination based on a voltage of the battery 4 can be made under a state where a current similar to a current at a time of starting the engine 10 is outputted from the battery 4. A determination result can be more precise.

If the permission determining unit 623 determines to permit a stop of idling of the engine 10 based on the voltage value and the current value of the battery 4 (S18:Yes), the permission determining unit 623 permits shift to an idling stop state (S21). Permitting a shift to the idling stop state means enabling idling of the engine 10 to be stopped upon satisfaction of the idling stop condition. In step S21, the permission determining unit 623 stores data indicating permission of a shift to the idling stop state in the storage device (not shown).

If the permission determining unit 623 determines not to permit a stop of idling of the engine 10 based on the voltage value and the current value of the battery 4 (S18:No), the permission determining unit 623 prohibits a shift to the idling stop state (S19). Prohibiting a shift to the idling stop state means that idling of the engine 10 is not stopped even when the idling stop condition is satisfied. In step S19, the permission determining unit 623 stores data indicating prohibition of a shift to the idling stop state in the storage device (not shown).

After step S19 or S21 mentioned above, the stop condition determining unit 624 determines whether or not the idling stop condition is satisfied (S22). In this manner, whether or not the idling stop condition is satisfied at a timing within the deceleration period is determined.

The idling stop condition is a condition for stopping idling. Examples of the idling stop condition include a condition that a rotation speed of the crankshaft 15 be lower than a predetermined threshold, a condition that a traveling speed of the vehicle 1 be lower than a predetermined threshold, a condition that the idling rotation speed during a vehicle stop continue for a predetermined time period, a condition that a brake be operated, and a condition that a temperature of the engine 10 be lower than a predetermined threshold. The idling stop condition may be a combination of some or all of the above conditions. The idling stop condition may be, for example, one of the above conditions.

If the stop condition determining unit 624 determines that the idling stop condition is satisfied (S22:Yes), the engine control unit 63 determines whether or not shift to the idling stop state has been permitted (S23). In step S23, the engine control unit 63 determines whether or not a stop of idling has been permitted by the permission determining unit 623. In detail, the engine control unit 63 refers to a determination result obtained by the permission determining unit 623 in step S18, to make the determination in step S23. The engine control unit 63 refers to the data indicating prohibition of shift to the idling stop state or the data indicating permission of shift to the idling stop state which are stored in the storage device (not shown).

If the determination results that shift to the idling stop state has not been permitted (S23:No), the engine control unit 63 puts the engine 10 into the idling state (S24). That is, the engine control unit 63 controls the engine 10 so as to prohibit shift from the deceleration period to a state where idling is stopped (S24). If a stop of idling of the engine 10 has not been permitted by the permission determining unit 623 (S18:No), the engine control unit 63 controls the engine 10 so as to prohibit shift from the deceleration period to a state where idling is stopped (S19).

Thus, even if the idling stop condition is satisfied (S22:Yes), the engine control unit 63 controls the engine 10 to have the idling state. To be specific, the engine control unit 63 controls the engine 10 to have a state where the engine 10 is operating without transmitting power for driving the vehicle 1. The engine control unit 63 does not stop rotation of the crankshaft 15. The engine control unit 63 continues the combustion operation of the engine 10, to continue rotation of the crankshaft 15.

If the determination results that shift to the idling stop state has been permitted (S23:Yes), the engine control unit 63 makes shift from the deceleration period to the state where idling is stopped (S25). That is, if a stop of idling of the engine 10 has been permitted by the permission determining unit 623 (S18:Yes) and the idling stop condition is satisfied (S23:Yes), the engine control unit 63 makes shift from the deceleration period to the state where idling is stopped (S25). In step S25, the engine control unit 63 controls the engine 10 so as to make shift from the deceleration period to the state where idling is stopped. In this way, the engine control unit 63 stops the combustion operation of the engine 10. Rotation of the crankshaft 15 is stopped. This means that a stop of idling of the engine 10 is implemented.

After the shift to the state where idling is stopped in step S25 mentioned above, the electric power supply unit 621 determines whether or not a restart condition for restarting the engine 10 is satisfied (S26). The restart condition is, for example, that the throttle valve SV be operated to open in accordance with a driver's operation.

If the restart condition is satisfied (S26:Yes), the engine control device 60 restarts the engine 10 (S27). In step S27, the electric power supply unit 621 performs a control for supplying electric power of the battery 4 to the motor 20 such that the motor 20 generates a driving force. As a result of the supply of electric power of the battery 4 to the motor 20, the motor 20 rotationally drives the crankshaft 15.

Here, the operation control unit 60A in the engine control device 60 controls the motor 20 in relation to starting the engine 10. The engine control device 60 determines whether or not to direct the motor 20 to rotate the crankshaft 15 in a direction reverse to a forward rotation direction of the engine 10, the determination being based on the voltage value and the current value of the battery 4 acquired in step S17. If the amount of electric power of the battery 4, which is based on the voltage value and the current value, is more than a reference value that enables the crankshaft 15 to overcome the high-load region only by forward rotation without the need for any reverse rotation, the engine control device 60 directs the motor 20 to drive the crankshaft 15 in forward rotation without any reverse rotation. If the amount of electric power of the battery 4, which is based on the voltage value and the current value, is equal to or less than the reference value, the engine control device 60 directs the motor 20 to drive the crankshaft 15 in reverse rotation prior to forward rotation. The crankshaft 15 undergoes the high-load region having a high rotation load and the low-load region. After the stop of idling of the engine 10, the crankshaft 15 is rotated in the reverse direction, and then the crankshaft 15 is rotated in the forward rotation direction. This makes it easy for the crankshaft 15 to retain a rotation speed when reaching the high-load region. The engine 10 is started with comparatively small electric power of the battery 4.

When directing the motor 20 to drive the crankshaft 15 in reverse rotation, the engine control device 60 performs a rotation-speed control based on the acquired voltage and current values.

When stopping the reverse rotation of the crankshaft 15, the engine control device 60 performs a brake control such that the crankshaft 15 stops at a target stop position. The engine control device 60 controls the inverter 61 such that the motor 20 generates a braking force on the reverse rotation. The engine control device 60 performs a braking-force control based on the voltage value and the current value of the battery 4.

The engine control device 60 performs a control such that the rotation speed of the crankshaft 15 decreases as electric power stored in the battery 4 is relatively larger. The engine control device 60 also performs a control such that a braking force generated when the crankshaft 15 is immediately before the target stop position increases as electric power stored in the battery 4 is relatively larger. This enables the engine control device 60 to rotate the crankshaft 15 in the reverse direction to a target position appropriate for starting with small electric power of the battery 4 while reducing a risk that the crankshaft 15 rotated in the reverse direction may overcome the high-load region.

Then, the engine control device 60 directs the motor 20 to rotate the crankshaft 15 in the forward rotation direction.

In step S27, the engine control device 60 starts operations of the spark plug 19 and the fuel injector device 18. As a result of a control performed in step S27, the engine 10 is restarted.

If the rotation speed of the crankshaft 15 is higher than a rotation speed that enables the battery 4 to be charged with electric power generated by the motor 20, the charge control unit 625 directs the motor 20 to generate electric power, though not shown in FIG. 4. The charge control unit 625 performs a control for charging the battery 4 with electric power that the motor 20 generates when the motor 20 is driven by the engine 10. For example, the charge control unit 625 performs a phase control in which timings when the switching parts 611 to 616 are rendered conducting are advanced or delayed. In the phase control, the charge control unit 625 advances or delays timings when the switching parts 611 to 616 are rendered conducting in accordance with a voltage that the inverter 61 outputs to the battery 4. At a time when the battery 4 is charged with electric power, a current flows toward the positive electrode of the battery 4.

The engine control device 60 of this embodiment performs, in part of the deceleration period (S11:Yes, S12:Yes), the control for supplying electric power of the battery 4 to the motor 20 such that the motor 20 generates a driving force (S16). At this time, the battery state acquisition unit 622 acquires a voltage value and a current value of the battery 4, and based on these values, whether or not to permit a stop of idling of the engine 10 is determined (S18). The engine control device 60 makes the determination based on a voltage value and a current value obtained when electric power of the battery 4 is supplied to the motor 20 under a condition similar to a condition of restarting the engine 10.

In the engine control device 60 of this embodiment, the determination of whether or not to permit shift from the deceleration period to the state where idling of the engine 10 is stopped is made based on a state of the battery 4 obtained in the deceleration period. This can shorten time intervals among a timing when the state of the battery 4 is acquired for a determination (S17), a timing when the determination is made (S18), and a timing when shift to the state where idling of the engine 10 is stopped is made (S25). This contributes to reduced differences among a state of the battery 4 at a time point of acquiring the state of the battery 4 for a determination, a state of the battery 4 obtained when the determination is made, and a state of the battery 4 at a time point of shifting to the state where idling of the engine 10 is stopped. Consequently, an increase in a difference can be suppressed between the state of the battery 4 obtained when the determination is made and a state of the battery 4 at a time point of restarting the engine 10. Accordingly, it is possible to improve a restart performance of the engine 10 while suppressing an increase in battery capacity which may be needed for absorbing a potential difference.

In the deceleration period (S11:Yes), generation of a driving force by the motor 20 with the centrifugal clutch 9 being in the non-transmission state (S15:Yes) makes the electric power supply less influential to traveling of the vehicle 1. In addition, permission of a stop of idling is determined based on a voltage and a current obtained under a condition that the centrifugal clutch 9 is in the non-transmission state, which is the same condition under which the engine 10 is restarted. Accordingly, permission of a stop of idling can be determined in the above-described step with an improved accuracy.

In the deceleration period (S11:Yes), if the acceleration instruction from the acceleration operator 8 is stopped (S12:Yes), the motor 20 generates a driving force and a state of the battery 4 is acquired. If the acceleration instruction from the acceleration operator 8 is stopped, it means that the driver has inputted an operation for decelerating or stopping the vehicle. In this case, a time interval can be further shortened between a timing of determining to permit a stop of idling and a timing of shifting to the state where idling of the engine 10 is stopped.

In the deceleration period (S11:Yes), at a time outside the period in which the engine 10 performs fuel combustion (S14:Yes), the motor 20 generates a driving force and a state of the battery 4 is acquired. During the period in which the engine 10 performs fuel combustion, the vehicle 1 normally keeps decelerating. Thus, a disturbance attributable to combustion of the engine 10 is less likely to occur in the acquired voltage and current of the battery 4. Moreover, a time interval can be further shortened between the timing of determining to permit a stop of idling and the timing of shifting to the state where idling of the engine 10 is stopped.

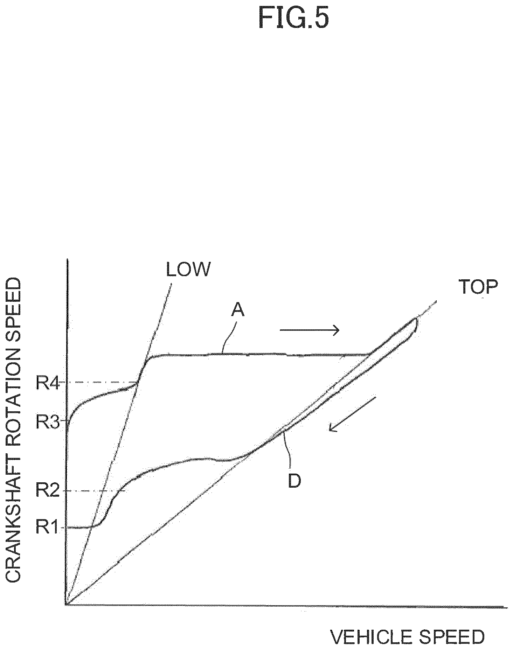

FIG. 5 is a graph showing characteristics of a rotation speed of the crankshaft 15 relative to a speed of vehicle 1 shown in FIG. 1. In the graph, the horizontal axis represents a speed of the vehicle 1. The vertical axis represents a rotation speed of the crankshaft 15. R1 represents an idling rotation speed of the engine 10 of the vehicle 1. R2 represents a clutch-out rotation speed at which the clutch 9 switches from the transmission state to the non-transmission state. R3 represents a clutch-in rotation speed at which the clutch 9 starts to switch from the non-transmission state to the transmission state. R4 represents a stall rotation speed at which switching to the transmission state is completed. The graph illustrates typical characteristics A obtained when the rotation speed of the crankshaft 15 increases. The graph also illustrates typical characteristics D obtained when the rotation speed of the crankshaft 15 decreases.

In a case of the rotation speed of the crankshaft 15 increasing, after the centrifugal clutch 9 comes into the transmission state, the vehicle 1 accelerates along a line of the characteristics A. In a case of the rotation speed of the crankshaft 15 decreasing, the vehicle 1 decelerates along a line of the characteristics D. FIG. 5 illustrates a line LOW representing a ratio between the vehicle speed and the crankshaft rotation speed, the ratio corresponding to a low gear state of the transmission. FIG. 5 also illustrates a line TOP representing a ratio between the vehicle speed and the crankshaft rotation speed, the ratio corresponding to a top gear state of the transmission.

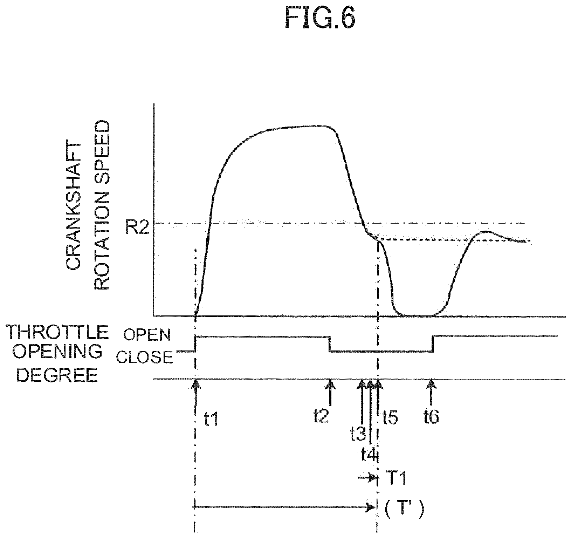

FIG. 6 is a timing chart showing an example of a state transition of the engine 10 under control by the engine control device 60 shown in FIG. 3. In the timing chart, the vertical axis represents a rotation speed of the crankshaft 15. The timing chart also illustrates a state of the throttle valve SV.

At time t1, the throttle valve SV is opened in accordance with a driver's operation on the acceleration operator 8, so that the engine 10 starts. The rotation speed of the crankshaft 15 of the engine 10 increases in accordance with the degree of opening of the throttle valve SV. The vehicle 1 also accelerates after the centrifugal clutch 9 comes into the transmission state.

In the example shown in FIG. 6, in the deceleration period, after the throttle valve SV is closed, a control for supplying electric power of the battery 4 to the motor 20 is performed such that the motor 20 generates a driving force.

After the throttle valve SV is closed at time t2, rotation of the crankshaft 15 decelerates. The vehicle 1 accordingly decelerates along the characteristics D shown in the graph of FIG. 5, for example. That is, the deceleration period starts. At time t3 within the deceleration period, a control for supplying electric power of the battery 4 to the motor 20 is performed such that the motor 20 generates a driving force. At this time, a voltage value and a current value of the battery 4 are acquired, and based on these values, whether or not to permit a stop of idling of the engine 10 is determined at time t4.

In the chart, the broken line represents a state of the engine 10 obtained in a case where a stop of idling is not permitted. In this case, the idling is maintained.

In the chart, the solid line represents a state of the engine 10 obtained in a case where a stop of idling is permitted. At time t5, shift to the idling stop state is made. After the idling is stopped, the engine 10 is restarted at time t6 which is the next time when the throttle valve SV is opened.

In the engine control device 60 of this embodiment, the determination (at time t4) of whether or not to permit shift from the deceleration period having begun at time t2 to the state where idling of the engine 10 is stopped is made based on a state of the battery 4 obtained in the deceleration period. T1 represents a time length from one to another among a timing (time t3) of acquiring a state of the battery 4 for a determination, a timing (time t4) of making the determination, and a timing (time t5) of shifting to the state where idling of the engine 10 is stopped.

A time length (T') represents a time length between a timing of acquiring a state of the battery 4 and a timing of shifting to the state where idling is stopped, in a case of determining to permit a stop of idling based on a voltage value and a current value that are detected while the motor is stopped, for example. The time length (T') is a time length in a configuration as shown in PTL 1, for example. In an example case having the time length (T'), after detection of voltage and current values and before a determination of whether or not to prohibit an engine stop, a motor generates electric power to charge a battery. In such a configuration, there is a risk that a battery's ability acquired based on a battery voltage and a drive current that are detected while the motor is stopped may be largely different from a battery's ability at a time when the determination about prohibition of an engine stop is made.

In the engine control device 60 of this embodiment, the time intervals T1 among the timing (time t3) of acquiring a state of the battery 4 for a determination, the timing (time t4) of making the determination, and the timing (time t5) of shifting to the state where idling of the engine 10 is stopped is short. Thus, there is a small difference between a state of the battery 4 used for the determination about permission of shift to idling and a state of the battery 4 at a time point of shifting to the state where idling of the engine 10 is stopped. It therefore is possible to downsize the battery 4 while retaining a starting performance of the engine 10.

In this embodiment, if it currently is in the deceleration period (FIG. 4, S11:Yes), the electric power supply unit 621 determines whether or not to cause the motor 20 to generate a driving force, based on a plurality of conditions (S12 to S15). In this respect, however, the determination of whether or not to cause the motor 20 to generate a driving force is not limited to this. The determination of whether or not to cause the motor 20 to generate a driving force may be one determination selected from the determinations in steps S12 to S15, or may be a combination of two or more determinations selected therefrom. The determinations in steps S12 to S15 may be omitted. That is, it may be possible to cause the motor 20 to generate a driving force on condition that it currently is in the deceleration period, regardless of the other conditions.

### [Second Embodiment]

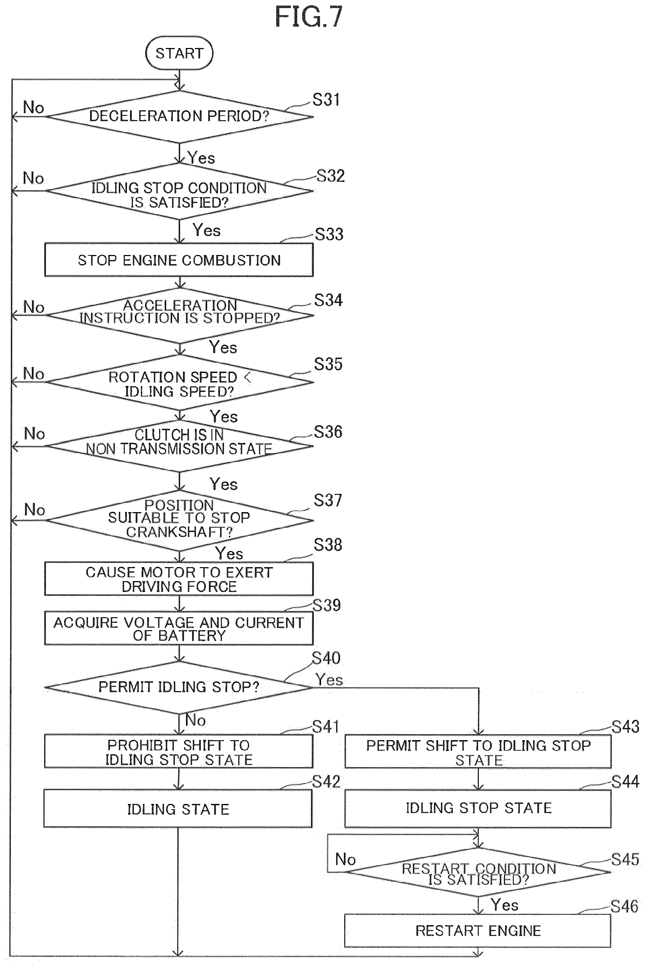

FIG. 7 is a flowchart illustrating operations of an engine control device according to a second embodiment of the present teaching.

A description of this embodiment employs the reference signs used in the first embodiment, and mainly deals with differences from the first embodiment.

Operations of an engine control device 60 of this embodiment will be described with reference to FIG. 3 and FIG. 7.

A process shown in FIG. 7 is started while the vehicle is traveling. In the engine control device 60, the electric power supply unit 621 determines whether or not it currently is in the deceleration period (S31). Details of step S31 are the same as those of step S11 (see FIG. 4) of the first embodiment.

If it currently is in the deceleration period (S31:Yes), the stop condition determining unit 624 determines whether or not the idling stop condition is satisfied (S32). In this manner, whether or not the idling stop condition is satisfied at a timing within the deceleration period is determined. Details of step S32 are the same as those of step S22 (see FIG. 4) of the first embodiment.

If the stop condition determining unit 624 determines that the idling stop condition is satisfied (S32:Yes), the engine control unit 63 stops the combustion operation of the engine 10 (S33). Thus, an idling stop operation is started.

After the engine control unit 63 stops the combustion operation of the engine 10 in step S33 mentioned above, the electric power supply unit 621 determines whether or not it currently is a timing for causing the motor 20 to generate a driving force (S34 to S37). If the determination results that it currently is a timing for causing the motor 20 to generate a driving force, the electric power supply unit 621 performs the control for supplying electric power of the battery 4 to the motor 20 such that the motor 20 generates a driving force (S38).

In step S34, as the determination of whether or not it currently is the timing for causing the motor 20 to generate a driving force, the electric power supply unit 621 determines whether or not an acceleration instruction from the acceleration operator 8 is stopped. The determination of whether or not an acceleration instruction is stopped is identical to the determination in step S12 (FIG. 4) of the first embodiment.

In the deceleration period (S31:Yes), if the acceleration instruction from the acceleration operator 8 is stopped (S34:Yes), the electric power supply unit 621 makes a next determination for causing the motor 20 to generate a driving force, that is, a determination of whether or not a rotation speed of the crankshaft 15 is lower than an idling rotation speed (S35). The determination of whether or not a rotation speed of the crankshaft 15 is lower than an idling rotation speed is identical to the determination in step S13 (see FIG. 4) of the first embodiment.

If a rotation speed of the crankshaft 15 is lower than the idling rotation speed (S35:Yes), the electric power supply unit 621 makes a next determination for causing the motor 20 to generates a driving force, that is, a determination of whether or not the clutch 9 is in the non-transmission state (S36). The determination of whether or not the clutch 9 is in the non-transmission state is identical to the determination in step S15 (FIG. 4) of the first embodiment.

If the clutch 9 is in the non-transmission state, the electric power supply unit 621 determines whether or not a position of the crankshaft 15 is a position suitable to stop the crankshaft 15 at a position within a given range (S37). In a situation where rotation of the crankshaft 15 is stopped after the combustion operation of the engine 10 is stopped, it is sometimes desirable that a stop position of the crankshaft 15 is within a given range. For example, a configuration in which rotation of the crankshaft 15 is started from a position within the given range at a time of restarting the engine 10 makes it possible to retain a higher starting performance while reducing the need for a size increase of the battery 4. The electric power supply unit 621 causes the motor 20 to generate a driving force, to allow rotation of the crankshaft 15 to stop in the compression stroke. More specifically, in step S37, the electric power supply unit 621 causes the motor 20 to generate a driving force, to identify whether or not the crankshaft 15 is at a position that allows rotation of the crankshaft 15 to stop in the compression stroke.

Generation of a driving force by the motor 20 with combustion of the engine 10 stopped and with the crankshaft 15 rotating makes it likely that the crankshaft 15 stops at a position within the given range. The driving force of the motor 20 is in a direction reverse to the rotation direction of the crankshaft 15. As a direction of the driving force, for example, the rotation direction of the crankshaft 15 may be adopted, too.

If the determination results that it currently is a timing for causing the motor 20 to generate a driving force (S37:Yes), the electric power supply unit 621 performs the control for supplying electric power of the battery 4 to the motor 20 such that the motor 20 generates a driving force (S38).

The electric power supply unit 621 performs a control that directs the motor 20 to accelerate or decelerate the crankshaft 15, thus causing the motor 20 to generate a driving force. Details of an operation for generating a driving force in step S38 mentioned above are almost the same as those in step S16 (see FIG. 4) of the first embodiment. In this embodiment, the combustion operation of the engine 10 is stopped (S33) on condition that the idling stop condition is satisfied. During a period in which rotation of the crankshaft 15 is stopping, a rotation speed of the crankshaft 15 is lower than a rotation speed during idling. The control for supplying electric power of the battery 4 to the motor 20 such that the motor 20 generates a driving force is performed when a rotation speed of the crankshaft 15 is lower than the rotation speed during idling.

In the control of step S38, electric power of the battery 4 is supplied to the motor 20 mentioned above, and at this time, the battery state acquisition unit 622 acquires a voltage value and a current value of the battery 4 (S39).

Then, based on the voltage value and the current value of the battery 4 acquired by the battery state acquisition unit 622, the operation control unit 60A performs a control for stopping idling of the engine 10 or for prohibiting a stop of idling. In addition, based on the voltage value and the current value of the battery 4 acquired by the battery state acquisition unit 622, the operation control unit 60A controls the motor 20 in relation to starting after a stop of idling of the engine 10. Details are as follows.

The permission determining unit 623 determines whether or not to permit a stop of idling of the engine 10 (S40). The permission determining unit 623 makes the determination based on the voltage value and the current value of the battery 4 which are acquired by the battery state acquisition unit 622 at a time when electric power of the battery 4 is supplied to the motor 20.

If the permission determining unit 623 determines not to permit a stop of idling of the engine 10 based on the voltage value and the current value of the battery 4 (S40:No), the permission determining unit 623 prohibits shift to the idling stop state (S41).

Details of an operation in steps S39 to S41 are the same as those in steps S17 to S19 (see FIG. 4) of the first embodiment.

After the permission determining unit 623 prohibits shift to the idling stop state (S41), the engine control unit 63 puts the engine 10 into the idling state (S42). That is, the engine control unit 63 controls the engine 10 so as to prohibit shift from the deceleration period to a state where idling is stopped. If a stop of idling of the engine 10 has not been permitted by the permission determining unit 623 (S40:No), the engine control unit 63 controls the engine 10 so as to prohibit shift from the deceleration period to a state where idling is stopped.

At a time point when a stop of idling is not permitted (S40:No), the rotation speed of the crankshaft 15 is lower than the rotation speed during idling. The engine control unit 63 controls operations of the spark plug 19 and the fuel injector device 18, to increase the rotation speed of the crankshaft 15 up to the rotation speed during idling. As a result, the rotation speed of the crankshaft 15 returns to the rotation speed during idling, and is kept at the rotation speed during idling. In the return to the rotation speed during idling, unlike in the restart, no electric power is supplied from the battery 4 to the motor 20.

In this manner, even if the idling stop condition is satisfied (S32:Yes), the engine control unit 63 continues the idling state of the engine 10.

In step S40 mentioned above, if the permission determining unit 623 determines to permit a stop of idling of the engine 10 based on the voltage value and the current value of the battery 4 (S40:Yes), the permission determining unit 623 permits shift to the idling stop state (S43). In addition, if the permission determining unit 623 determines to permit a stop of idling of the engine 10, the engine control unit 63 makes shift from the deceleration period to the state where idling is stopped (S44). The engine control unit 63 stops the combustion operation of the engine 10. Rotation of the crankshaft 15 is stopped accordingly. This means that the engine 10 is put into the idling stop state.

After shift to the state where idling is stopped in step S44 mentioned above, the electric power supply unit 621 determines whether or not a restart condition for restarting the engine 10 is satisfied (S45).

If the restart condition is satisfied (S45:Yes), the engine control device 60 restarts the engine 10 (S46). In step S46, the electric power supply unit 621 performs a control for supplying electric power of the battery 4 to the motor 20 such that the motor 20 generates a driving force. As a result of the supply of electric power of the battery 4 to the motor 20, the motor 20 rotationally drives the crankshaft 15.

In step S46, moreover, the engine control device 60 starts operations of the spark plug 19 and the fuel injector device 18. As a result of a control performed in step S46, the engine 10 is restarted. Details of an operation for generating a driving force in steps S44 to S46 mentioned above are the same as those in steps S25 to S27 of the first embodiment.

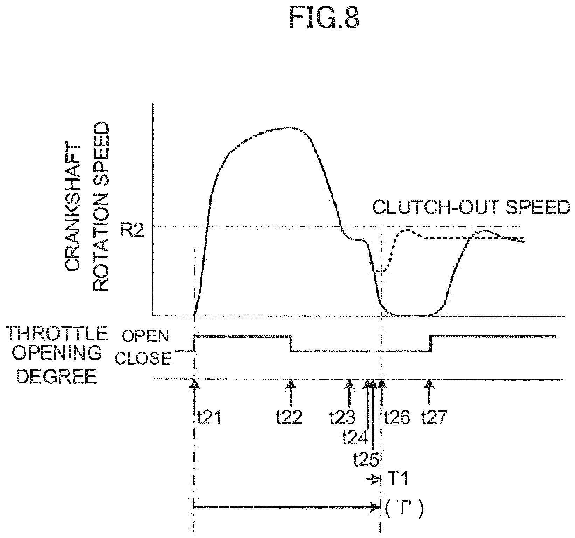

FIG. 8 is a timing chart showing an example of a state transition of the engine 10 under control by the engine control device 60 according to the second embodiment.

In the example shown in FIG. 8, the idling stop condition is satisfied if idling in the vehicle stopped continues for a predetermined time period.

At time t21, the acceleration operator 8 gives an acceleration instruction in accordance with a driver's operation, so that the engine 10 starts. The rotation speed of the crankshaft 15 of the engine 10 increases in accordance with the amount of operation on the acceleration operator 8. In the example shown in FIG. 8, the acceleration instruction from the acceleration operator 8 stops at time t22, and thus rotation of the crankshaft 15 decelerates. The vehicle 1 decelerates accordingly. As the stop of the acceleration instruction from the acceleration operator 8 continues, the vehicle 1 eventually stops. At time t23, which is a time point when a state where the rotation speed of the crankshaft 15 is lowered to the rotation speed during idling has continued for a predetermined time period, the idling stop condition is satisfied.

At time t23, combustion of the engine 10 stops. After combustion of the engine 10 stops, at time t24, a control for supplying electric power of the battery 4 to the motor 20 is performed such that the motor 20 generates a driving force. The control for supplying electric power of the battery 4 to the motor 20 such that the motor 20 generates a driving force is performed in a period during which the rotation speed of the crankshaft 15 is lower than the rotation speed of the crankshaft 15 at a time of the engine 10 idling. At this time, a voltage value and a current value of the battery 4 are acquired, and based on these values, whether or not to permit a stop of idling of the engine 10 is determined at time t25 (S40).

In the chart, the broken line represents a state of the engine 10 obtained in a case where shift to the idling stop state is not permitted. In this case, the idling is maintained. Thus, at time t26, the combustion operation is resumed. As a result, the rotation speed of the crankshaft 15 returns to the rotation speed during idling.

In the engine control device 60 of this embodiment, the determination (at time t25) of whether or not to permit shift from the deceleration period having begun at time t22 to the state where idling of the engine 10 is stopped is made based on a state of the battery 4 obtained after the stop of combustion of the engine 10. T1 represents time intervals among a timing (time t24) of acquiring a state of the battery 4 for a determination, a timing (time t25) of making the determination, and a timing (time t26) of shifting to the state where idling of the engine 10 is stopped.

A time length (T') represents a time length between a timing of acquiring a state of the battery 4 and a timing of shifting to the state where idling is stopped, in a case of determining to permit a stop of idling based on a voltage value and a current value that are detected while the motor is stopped, for example. The time length (T') is a time length in a configuration as shown in PTL 1, for example. In an example case having the time length (T'), after detection of voltage and current values and before a determination of whether or not to prohibit an engine stop, a motor generates electric power to charge a battery. In such a configuration, there is a risk that a battery's ability acquired based on a battery voltage and a drive current that are detected while the motor is stopped may be largely different from a battery's ability at a time when the determination about prohibition of an engine stop is made.

In the engine control device 60 of this embodiment, the time intervals T1 among the timing (time t24) of acquiring a state of the battery 4 for a determination, the timing (time t25) of making the determination, and the timing (time t26) of shifting to the state where idling of the engine 10 is stopped is short.

In this embodiment, if it currently is in the deceleration period (FIG. 7, S31:Yes) and the idling stop condition is satisfied (S32:Yes), the electric power supply unit 621 makes the determination of whether or not to cause the motor 20 to generate a driving force, based on a plurality of conditions (S34 to S37). The determination of whether or not to cause the motor 20 to generate a driving force is not limited to this. The determination of whether or not to cause the motor 20 to generate a driving force may be one determination selected from the determinations in steps S34 to S37, or may be a combination of determinations selected therefrom. The determinations in steps S34 to S37 may be omitted. That is, it may be possible to cause the motor 20 to generate a driving force immediately if it currently is in the deceleration period.

### [Third Embodiment]

A third embodiment of the present teaching will now be described. This embodiment is different from the first embodiment in terms of details of the determination to permit a stop of idling of the engine 10. A description of this embodiment employs the reference signs used in the first embodiment, and mainly deals with differences from the first embodiment.

In this embodiment, for example, the permission determining unit 623 refers to a map of voltage and current values stored in the storage device, and thus determines to permit a stop of idling directly based on the voltage value and the current value.

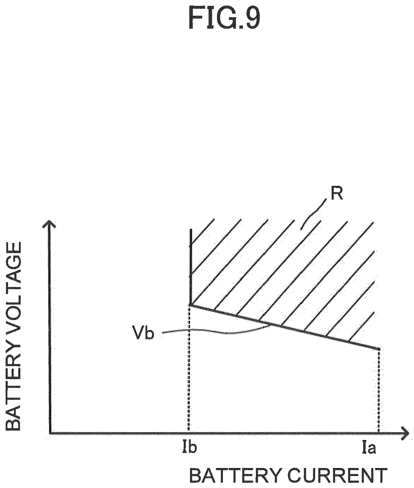

FIG. 9 is a graph showing a voltage-current map for determining to permit a stop of idling.

In the graph of FIG. 9, the horizontal axis represents a current of the battery 4. The vertical axis represents a voltage of the battery 4.

The map shown in FIG. 9 associates a voltage value, a current value, and a determination result with one another. The determination result means permission or non-permission of a stop of idling. In the map shown in FIG. 9, a hatched region represents a permission region R.

The permission determining unit 623 determines to permit a stop of idling, depending on whether or not a voltage value and a current value of the battery 4 acquired by the battery state acquisition unit 622 are within the permission region R of the map. If the voltage value and the current value are in the permission region R of the graph, the permission determining unit 623 permits to stop idling (FIG. 4, S18:Yes). If the voltage value and the current value are in the permission region of the graph, the permission determining unit 623 permits shift to the idling stop state (FIG. 4, S18:Yes). If the voltage value and the current value are not in the permission region of the graph, the permission determining unit 623 prohibits shift to the idling stop state (FIG. 4, S18:No).

The permission region R represents such a range of voltage and current values of the battery 4 that the battery 4 is able to supply electric power capable of starting the engine 10 to the motor 20. The permission region R is obtained from, for example, voltage and current values of a battery capable of starting the engine 10 a predetermined number of times among batteries with different charge levels and different deterioration degrees.

The permission region R of the map is defined at least by a lower limit value Ib of the current and a lower limit value Vb of the voltage. More specifically, the permission region R is defined by an upper limit value Ia of the current, the lower limit value Ib of the current, and the lower limit value Vb of the voltage. The lower limit value Vb of the voltage varies depending on the current. The lower limit value Vb of the voltage decreases as the current increases. The lower limit value Vb of the voltage is defined as a function of the current.

In this embodiment, permission to stop idling is determined by using the map in which the voltage value, the current value, and the determination result are associated with one another. Accordingly, the battery state can be more precisely reflected in the determination of whether or not to permit a stop of idling.

It may also be acceptable that the permission determining unit 623 determines to permit a stop of idling by using only the lower limit value Ib of the current and the lower limit value Vb of the voltage which define the permission region R of the map. For example, the permission determining unit 623 calculates the lower limit value Vb of the voltage from a current value of the battery 4 acquired by the battery state acquisition unit 622. The permission determining unit 623 identifies whether or not an acquired voltage value of the battery 4 is greater than the lower limit value Vb of the voltage. The permission determining unit 623 also identifies whether or not an acquired current value of the battery 4 is greater than the lower limit value Ib of the current. If the voltage value and current value of the battery 4 are greater than the lower limit value Vb of the voltage and the lower limit value Ib of the current, respectively, the permission determining unit 623 permits a stop of idling. With such a configuration, the permission determining unit 623 is able to determine whether or not to permit a stop of idling without using the map.

A control illustrated in the third embodiment can be combined with the first and second embodiments. In both of the first and second embodiments, whether or not to permit a stop of idling can be determined by using a map in which a voltage value, a current value, and a determination result are associated with one another.

The embodiments described above illustrate example cases where the electric power supply unit 621 acquires a rotation speed of the crankshaft 15, to determine whether or not it currently is in the deceleration period (S11, S31). The engine control device 60 is not limited to this, and may not need to positively determine whether or not it currently is in the deceleration period. It suffices that, for example, as a result of the operation of the engine control device 60, the control for supplying electric power of the battery to the motor such that the motor generates a driving force is performed in at least part of the deceleration period.

It should be understood that the terms and expressions used in the above embodiments are for descriptions and not to be construed in a limited manner, do not eliminate any equivalents of features shown and mentioned herein, and allow various modifications falling within the claimed scope of the present teaching. The present teaching may be embodied in many different forms. The present disclosure is to be considered as providing embodiments of the principles of the teaching. The embodiments are described herein with the understanding that such embodiments are not intended to limit the teaching to preferred embodiments described herein and/or illustrated herein. The embodiments described herein are not limiting. The present teaching includes any and all embodiments having equivalent elements, modifications, omissions, combinations, adaptations and/or alterations as would be appreciated by those in the art based on the present disclosure. The limitations in the claims are to be interpreted broadly based on the language employed in the claims and not limited to embodiments described in the present specification or during the prosecution of the present application. The present teaching is to be interpreted broadly based on the language employed in the claims. The scope of the invention is defined by the appended claims.

### Reference Signs List

- EU: engine unit
- 1: vehicle
- 4: battery
- 9: centrifugal clutch
- 10: engine
- 15: crankshaft
- 20: motor
- 60: engine control device
- 60A: operation control unit
- 63: engine control unit
- 611: switching part
- 621: electric power supply unit
- 622: battery state acquisition unit
- 623: permission determining unit
- 624: stop condition determining unit
- 625: charge control unit
- SV: throttle valve

## Claims

1. An engine control device (60) comprising an engine (10), a motor (20) configured to rotationally drive a crankshaft (15) of the engine (10), and a battery (4) that is configured to store electric power to be supplied to the motor (20), the engine control device (60) being configured to be mounted on a vehicle (1) that is driven by the engine (10),
the engine control device (60) comprising:
an electric power supply unit (621) configured to perform a control for supplying electric power of the battery (4) to the motor (20) such that the motor (20) generates a driving force in at least part of a deceleration period during which the crankshaft (15) is rotating without any acceleration of the vehicle (1) from a time point when the vehicle (1) starts to decelerate;
a battery state acquisition unit (622) configured to acquire at least one of a voltage value or a current value of the battery (4) at least when electric power of the battery (4) is supplied to the motor (20) under a control that the electric power supply unit (621) performs in at least part of the deceleration period; and
an operation control unit (60A) configured to perform a control for stopping engine idling or prohibiting a stop of the idling and/or a control on the motor (20) in relation to starting after a stop of the engine idling, based on at least one of a voltage value or a current value of the battery (4) acquired by the battery state acquisition unit (622) when electric power of the battery (4) is supplied to the motor (20) under a control that the electric power supply unit (621) performs in at least part of the deceleration period.

2. The engine control device (60) according to claim 1, wherein
the operation control unit (60A) includes:
a permission determining unit (623) configured to determine whether or not to permit a stop of the engine idling based on at least one of a voltage value or a current value of the battery (4) acquired by the battery state acquisition unit (622) when electric power of the battery (4) is supplied to the motor (20) under a control that the electric power supply unit (621) performs in at least part of the deceleration period; and
an engine control unit (63) configured to control the engine (10) so as to shift from the deceleration period to a state where the engine idling is stopped if a stop of the engine idling is permitted by the permission determining unit (623), as well as an idling stop condition that is predefined as a condition for stopping the engine idling is satisfied, and so as to prohibit shift from the deceleration period to a state where the engine idling is stopped if a stop of the engine idling is not permitted by the permission determining unit (623).

3. The engine control device according to claim 1 or 2, wherein
the electric power supply unit (621) is configured to supply the electric power of the battery (4) to the motor (20) such that the motor (20) generates a driving force by controlling the motor (20) to accelerate or decelerate the crankshaft (15) in at least part of a deceleration period during which the crankshaft (15) is rotating without any acceleration of the vehicle (1) from a time point when the vehicle (1) starts to decelerate;
the battery state acquiring unit (622) is configured to acquire the at least one of a voltage value or a current value of the battery (4) at least when the electric power supply unit (621) performs the control for supplying the electric power of the battery (4) to the motor (20) such that the motor (20) generates the driving force by controlling the motor (20) to accelerate or decelerate the crankshaft (15) in at least the part of the deceleration period.

4. The engine control device (60) according to any one of claims 1 to 3, wherein
the motor (20) is connected to the crankshaft (15) without interposition of a device capable of varying an input/output speed ratio.

5. The engine control device (60) according to any one of claims 1 to 4, wherein
the vehicle (1) includes an acceleration operator (8) configured to instruct that the vehicle (1) be accelerated in accordance with a driver's operation, and
the electric power supply unit (621) is configured to perform a control for supplying electric power of the battery (4) to the motor (20) such that the motor (20) generates a driving force in at least part of a period during which an acceleration instruction from the acceleration operator (8) is stopped within the deceleration period.

6. The engine control device (60) according to any one of claims 1 to 5, wherein
the electric power supply unit (621) is configured to perform a control for supplying electric power of the battery (4) to the motor (20) such that the motor (20) generates a driving force in at least part of a period outside a period during which the engine (10) performs fuel combustion within the deceleration period.

7. The engine control device (60) according to any one of claims 1 to 6, wherein
the engine (10) includes a clutch (9) switchable between a transmission state in which a rotational force of the crankshaft (15) is transmitted to a drive member (3b) of the vehicle (1) and a non-transmission state where the rotational force is not transmitted, and
the electric power supply unit (621) is configured to perform a control for supplying electric power of the battery (4) to the motor (20) such that the motor (20) generates a driving force in at least part of a period during which the clutch (9) is in the non-transmission state where the rotational force is not transmitted within the deceleration period.

8. The engine control device (60) according to any one of claims 1 to 7, wherein
the electric power supply unit (621) is configured to perform a control for supplying electric power of the battery (4) to the motor (20) such that the motor (20) generates a driving force in at least part of a period during which a rotation speed of the crankshaft (15) is lower than a rotation speed of the crankshaft (15) in the engine idling within the deceleration period.

9. The engine control device (60) according to any one of claims 2 to 7, further comprising a stop condition determining unit (624) configured to determine whether or not the idling stop condition is satisfied at a timing within the deceleration period, wherein
the electric power supply unit (621) is configured to perform a control for supplying electric power of the battery (4) to the motor (20) such that the motor (20) generates a driving force in at least part of a period during which a rotation speed of the crankshaft (15) is lower than a rotation speed of the crankshaft (15) in the engine idling within the deceleration period and after the stop condition determining unit (624) determines that the idling stop condition is satisfied.

10. The engine control device (60) according to any one of claims 1 to 9, comprising a charge control unit (625) configured to perform a control for charging the battery (4) with electric power generated by the motor (20) while the motor (20) is driven by the engine (10).

11. The engine control device (60) according to claim 6, wherein
the engine (10) is configured to perform a combustion operation in which fuel combustion is repeated with intervals, and
the electric power supply unit (621) is configured to perform a control for supplying electric power of the battery (4) to the motor (20) such that the motor (20) generates a driving force in at least part of a period outside a period during which the engine (10) performs the fuel combustion in a combustion operation within the deceleration period.

12. The engine control device (60) according to claim 6, wherein
the electric power supply unit (621) is configured to perform a control for supplying electric power of the battery (4) to the motor (20) such that the motor (20) generates a driving force in at least part of a period during which the combustion operation of the engine (10) having fuel combustion repeated with intervals is stopped within the deceleration period.

13. The engine control device (60) according to any one of claims 1 to 12, wherein
the operation control unit (60A) is configured to determine whether or not to direct the motor (20) to rotate the crankshaft (15) in a direction reverse to a direction of forward rotation caused by a combustion operation of the engine (10) after a stop of the engine idling, the determination being based on at least one of a voltage value or a current value of the battery (4).

14. The engine control device (60) according to any one of claims 1 to 12, wherein
the operation control unit (60A) is configured to control a rotation speed of the crankshaft (15) at a time of directing the motor (20) to rotate the crankshaft (15) in a direction reverse to a direction of forward rotation caused by a combustion operation of the engine (10) after a stop of the engine idling, the control being based on at least one of a voltage value or a current value of the battery (4).

15. The engine control device (60) according to any one of claims 1 to 12, wherein
the operation control unit (60A) is configured to control a braking force at a time of directing the motor (20) to stop rotation of the crankshaft (15) in a direction reverse to a direction of forward rotation caused by a combustion operation of the engine (10) after a stop of the engine idling, the control being based on at least one of a voltage value or a current value of the battery (4).

16. An engine unit comprising the engine control device (60) according to any one of claims 1 to 15, the engine (10), and the motor (20), the engine unit being configured to be mounted on the vehicle (1).

17. A vehicle (1) comprising the engine control device (60) according to any one of claims 1 to 15, the engine (10), the motor (20), and the battery (4).

## Patentansprüche

1. Eine Maschinensteuervorrichtung (60) mit einer Maschine (10), einem Motor (20), der ausgebildet ist, um eine Kurbelwelle (15) der Maschine (10) rotationsmäßig anzutreiben, und einer Batterie (4), die ausgebildet ist, um elektrische Leistung zu speichern, die dem Motor (20) zugeführt werden soll, wobei die Maschinensteuervorrichtung (60) ausgebildet ist, um an einem Fahrzeug (1) befestigt zu sein, das durch die Maschine (10) angetrieben wird,
wobei die Maschinensteuervorrichtung (60) folgende Merkmale aufweist:
eine elektrische Leistungsversorgungseinheit (621), die ausgebildet ist, um eine Steuerung für ein Zuführen elektrischer Leistung der Batterie (4) an den Motor (20) durchzuführen, so dass der Motor (20) eine Antriebskraft in zumindest einem Teil einer Verlangsamungsperiode erzeugt, während der die Kurbelwelle (15) sich ohne Beschleunigung des Fahrzeugs (1) dreht, von einem Zeitpunkt an, zu dem das Fahrzeug (1) sich zu verlangsamen beginnt;
eine Batteriezustandserfassungseinheit (622), die ausgebildet ist, um zumindest einen eines Spannungswerts oder eines Stromwerts der Batterie (4) zumindest dann zu erfassen, wenn elektrische Leistung der Batterie (4) dem Motor (20) zugeführt wird, unter einer Steuerung, die die elektrische Leistungsversorgungseinheit (621) in zumindest einem Teil der Verlangsamungsperiode durchführt; und
eine Betriebssteuereinheit (60A), die ausgebildet ist, um eine Steuerung für ein Stoppen eines Maschinenleerlaufs oder Verhindern eines Stoppens des Leerlaufs und/oder eine Steuerung an dem Motor (20) in Bezug auf ein Starten nach einem Stopp des Maschinenleerlaufs basierend auf zumindest einem eines Spannungswerts oder eines Stromwerts der Batterie (4) durchzuführen, der durch die Batteriezustandserfassungseinheit (622) erfasst wird, wenn elektrische Leistung der Batterie (4) dem Motor (20) zugeführt wird, unter einer Steuerung, die die elektrische Leistungsversorgungseinheit (621) in zumindest einem Teil der Verlangsamungsperiode durchführt,

2. Die Maschinensteuervorrichtung (60) gemäß Anspruch 1, bei der:
die Betriebssteuereinheit (60A) folgende Merkmale aufweist:
eine Erlaubnisbestimmungseinheit (623), die ausgebildet ist, um zu bestimmen, ob ein Stoppen des Maschinenleerlaufs erlaubt ist oder nicht, basierend auf zumindest einem eines Spannungswerts oder eines Stromwerts der Batterie (4), der durch die Batteriezustandserfassungseinheit (622) erfasst wird, wenn elektrische Leistung der Batterie (4) dem Motor (20) zugeführt wird, unter einer Steuerung, die die elektrische Leistungsversorgungseinheit (621) in zumindest einem Teil der Verlangsamungsperiode durchführt; und
eine Maschinensteuereinheit (63), die ausgebildet ist, um die Maschine (10) so zu steuern, dass sie von der Verlangsamungsperiode in einen Zustand wechselt, in dem der Maschinenleerlauf gestoppt ist, wenn ein Stoppen des Maschinenleerlaufs durch die Erlaubnisbestimmungseinheit (623) erlaubt ist, sowie eine Leerlaufstoppbedingung, die vordefiniert ist, wenn eine Bedingung zum Stoppen des Maschinenleerlaufs erfüllt ist, und um ein Wechseln von der Verlangsamungsperiode in einen Zustand zu verhindern, in dem der Maschinenleerlauf gestoppt ist,
wenn ein Stoppen des Maschinenleerlaufs nicht durch die Erlaubnisbestimmungseinheit (623) erlaubt wird.

3. Die Maschinensteuervorrichtung gemäß Anspruch 1 oder 2, bei der:
die elektrische Leistungsversorgungseinheit (621) ausgebildet ist, um die elektrische Leistung der Batterie (4) dem Motor (20) derart zuzuführen, dass der Motor (20) eine Antriebskraft erzeugt, durch Steuern des Motors (20), um die Kurbelwelle (15) in zumindest einem Teil einer Verlangsamungsperiode zu beschleunigen oder zu verlangsamen, während der die Kurbelwelle (15) sich ohne Beschleunigung des Fahrzeugs (1) dreht, von einem Zeitpunkt an, zu dem das Fahrzeug (1) sich zu verlangsamen beginnt;
die Batteriezustandserfassungseinheit (622) ausgebildet ist, um den zumindest einen eines Spannungswerts oder eines Stromwerts der Batterie (4) zumindest dann zu erfassen, wenn die elektrische Leistungsversorgungseinheit (621) die Steuerung zum Zuführen der elektrischen Leistung der Batterie (4) an den Motor (20) durchführt, so dass der Motor (20) die Antriebskraft erzeugt, durch Steuern des Motors (20), um die Kurbelwelle (15) in zumindest dem Teil der Verlangsamungsperiode zu beschleunigen oder zu verlangsamen.

4. Die Maschinensteuervorrichtung (60) gemäß einem der Ansprüche 1 bis 3, bei der:
der Motor (20) mit der Kurbelwelle (15) verbunden ist, ohne dass eine Vorrichtung dazwischen angeordnet ist, die in der Lage ist, ein Eingangs-/Ausgangs-Geschwindigkeitsverhältnis zu variieren.

5. Die Maschinensteuervorrichtung (60) gemäß einem der Ansprüche 1 bis 4, bei der:
das Fahrzeug (1) einen Beschleunigungsbediener (8) aufweist, der ausgebildet ist, um anzuweisen, dass das Fahrzeug (1) gemäß einer Betätigung durch den Fahrer beschleunigt werden soll, und
die elektrische Leistungsversorgungseinheit (621) ausgebildet ist, um eine Steuerung zum Zuführen elektrischer Leistung der Batterie (4) an den Motor (20) derart durchzuführen, dass der Motor (20) eine Antriebskraft in zumindest einem Teil einer Periode erzeugt, während der ein Beschleunigungsbefehl von dem Beschleunigungsbediener (8) gestoppt wird, innerhalb der Verlangsamungsperiode.

6. Die Maschinensteuervorrichtung (60) gemäß einem der Ansprüche 1 bis 5, bei der:
die elektrische Leistungsversorgungseinheit (621) ausgebildet ist, um eine Steuerung zum Zuführen elektrischer Leistung der Batterie (4) an den Motor (20) derart durchzuführen, dass der Motor (20) eine Antriebskraft in zumindest einem Teil einer Periode außerhalb einer Periode erzeugt, während der die Maschine (10) eine Brennstoffverbrennung durchführt, innerhalb der Verlangsamungsperiode.

7. Die Maschinensteuervorrichtung (60) gemäß einem der Ansprüche 1 bis 6, bei der:
die Maschine (10) eine Kupplung (9) aufweist, die zwischen einem Übertragungszustand, in dem eine Rotationskraft der Kurbelwelle (15) auf ein Antriebsbauteil (3b) des Fahrzeugs (1) übertragen wird, und einem Nicht-Übertragungszustand umschaltbar ist, in dem die Rotationskraft nicht übertragen wird, und
die elektrische Leistungsversorgungseinheit (621) ausgebildet ist, um eine Steuerung zum Zuführen elektrischer Leistung der Batterie (4) an den Motor (20) derart durchzuführen, dass der Motor (20) eine Antriebskraft in zumindest einem Teil einer Periode erzeugt, während der die Kupplung (9) in dem Nicht-Übertragungszustand ist, in dem die Rotationskraft nicht übertragen wird, innerhalb der Verlangsamungsperiode.

8. Die Maschinensteuervorrichtung (60) gemäß einem der Ansprüche 1 bis 7, bei der:
die elektrische Leistungsversorgungseinheit (621) ausgebildet ist, um eine Steuerung zum Zuführen elektrischer Leistung der Batterie (4) an den Motor (20) derart durchzuführen, dass der Motor (20) eine Antriebskraft in zumindest einem Teil einer Periode erzeugt, während der eine Rotationsgeschwindigkeit der Kurbelwelle (15) niedriger ist als eine Rotationsgeschwindigkeit der Kurbelwelle (15) bei dem Maschinenleerlauf, innerhalb der Verlangsamungsperiode.

9. Die Maschinensteuervorrichtung (60) gemäß einem der Ansprüche 2 bis 7, die ferner eine Stoppbedingungsbestimmungseinheit (624) aufweist, die ausgebildet ist, um zu bestimmen, ob die Leerlaufstoppbedingung erfüllt ist oder nicht, zu einer Zeitgebung innerhalb der Verlangsamungsperiode, wobei:
die elektrische Leistungsversorgungseinheit (621) ausgebildet ist, um eine Steuerung zum Zuführen elektrischer Leistung der Batterie (4) an den Motor (20) derart durchzuführen, dass der Motor (20) eine Antriebskraft in zumindest einem Teil einer Periode erzeugt, während der eine Rotationsgeschwindigkeit der Kurbelwelle (15) niedriger ist als eine Rotationsgeschwindigkeit der Kurbelwelle (15) bei dem Maschinenleerlauf, innerhalb der Verlangsamungsperiode, und nachdem die Stoppbedingungsbestimmungseinheit (624) bestimmt, dass die Leerlaufstoppbedingung erfüllt ist.

10. Die Maschinensteuervorrichtung (60) gemäß einem der Ansprüche 1 bis 9, die eine Ladesteuereinheit (625) aufweist, die ausgebildet ist, um eine Steuerung zum Laden der Batterie (4) mit elektrischer Leistung, die durch den Motor (20) erzeugt wird, durchzuführen, während der Motor (20) durch die Maschine (10) angetrieben wird.

11. Die Maschinensteuervorrichtung (60) gemäß Anspruch (6), bei der:
die Maschine (10) ausgebildet ist, um einen Verbrennungsvorgang durchzuführen, bei dem eine Brennstoffverbrennung mit Intervallen wiederholt wird, und
die elektrische Leistungsversorgungseinheit (621) ausgebildet ist, um eine Steuerung zum Zuführen elektrischer Leistung der Batterie (4) an den Motor (20) derart durchzuführen, dass der Motor (20) eine Antriebskraft in zumindest einem Teil einer Periode außerhalb einer Periode erzeugt, während der die Maschine (10) die Brennstoffverbrennung bei einem Verbrennungsvorgang durchführt, innerhalb der Verlangsamungsperiode.

12. Die Maschinensteuervorrichtung (60) gemäß Anspruch 6, bei der:
die elektrische Leistungsversorgungseinheit (621) ausgebildet ist, um eine Steuerung zum Zuführen elektrischer Leistung der Batterie (4) an den Motor (20) derart durchzuführen, dass der Motor (20) eine Antriebskraft in zumindest einem Teil einer Periode erzeugt, während der der Verbrennungsvorgang der Maschine (10) mit wiederholter Brennstoffverbrennung mit Intervallen gestoppt wird, innerhalb der Verlangsamungsperiode.

13. Die Maschinensteuervorrichtung (60) gemäß einem der Ansprüche 1 bis 12, bei der:
die Betriebssteuereinheit (60A) ausgebildet ist, um zu bestimmen, ob der Motor (20) angewiesen werden soll oder nicht, die Kurbelwelle (15) in einer Richtung zu drehen, die umgekehrt zu einer Richtung einer Vorwärtsdrehung ist, die durch einen Verbrennungsvorgang der Maschine (10) verursacht wird, nach einem Stoppen des Maschinenleerlaufs, wobei die Bestimmung auf zumindest einem eines Spannungswerts oder eines Stromwerts der Batterie (4) basiert.

14. Die Maschinensteuervorrichtung (60) gemäß einem der Ansprüche 1 bis 12, bei der:
die Betriebssteuereinheit (60A) ausgebildet ist, um eine Rotationsgeschwindigkeit der Kurbelwelle (15) zu einer Zeit eines Anweisens des Motors (20), die Kurbelwelle (15) in einer Richtung zu drehen, die umgekehrt zu einer Richtung einer Vorwärtsdrehung ist, die durch einen Verbrennungsvorgang der Maschine (10) verursacht wird, zu steuern, nach einem Stoppen des Maschinenleerlaufs, wobei die Steuerung auf zumindest einem eines Spannungswerts oder eines Stromwerts der Batterie (4) basiert.

15. Die Maschinensteuervorrichtung (60) gemäß einem der Ansprüche 1 bis 12, bei der:
die Betriebssteuereinheit (60A) ausgebildet ist, um eine Bremskraft zu einer Zeit eines Anweisens des Motors (20), eine Drehung der Kurbelwelle (15) in einer Richtung zu stoppen, die umgekehrt zu einer Richtung einer Vorwärtsdrehung ist, die durch einen Verbrennungsvorgang der Maschine (10) verursacht wird, zu steuern, nach einem Stoppen des Maschinenleerlaufs, wobei die Steuerung auf zumindest einem eines Spannungswerts oder eines Stromwerts der Batterie (4) basiert.

16. Eine Maschineneinheit mit der Maschinensteuervorrichtung (60) gemäß einem der Ansprüche 1 bis 15, der Maschine (10) und dem Motor (20), wobei die Maschineneinheit ausgebildet ist, um an dem Fahrzeug (1) befestigt zu sein.

17. Ein Fahrzeug (1) mit der Maschinensteuervorrichtung (60) gemäß einem der Ansprüche 1 bis 5, der Maschine (10), dem Motor (20) und der Batterie (4).

## Revendications

1. Dispositif de commande de moteur (60) comprenant un moteur (10), un moteur (20) configuré pour entraîner en rotation un vilebrequin (15) du moteur (10), et une batterie (4) qui est configurée pour accumuler de l'énergie électrique à alimenter vers le moteur (20), le dispositif de commande de moteur (60) étant configuré pour être monté sur un véhicule (1) qui est entraîné par le moteur (10),
le dispositif de commande de moteur (60) comprenant:
une unité d'alimentation de courant électrique (621) configurée pour effectuer une commande pour alimenter du courant électrique de la batterie (4) vers le moteur (20) de sorte que le moteur (20) génère une force motrice pendant au moins une partie d'une période de décélération pendant laquelle le vilebrequin (15) tourne sans aucune accélération du véhicule (1) à partir d'un moment où le véhicule (1) commence à décélérer;
une unité d'acquisition d'état de batterie (622) configurée pour acquérir au moins l'une parmi une valeur de tension ou une valeur de courant de la batterie (4) au moins lorsque du courant électrique de la batterie (4) est alimenté vers le moteur (20) par une commande qu'effectue l'unité d'alimentation de courant électrique (621) pendant au moins une partie de la période de décélération; et
une unité de commande de fonctionnement (60A) configurée pour effectuer une commande pour arrêter le fonctionnement au ralenti de moteur ou interdire un arrêt du fonctionnement au ralenti et/ou une commande sur le moteur (20) relative au démarrage après un arrêt du fonctionnement au ralenti de moteur, sur base d'au moins l'une parmi une valeur de tension ou une valeur de courant de la batterie (4) acquise par l'unité d'acquisition d'état de batterie (622) lorsque du courant électrique de la batterie (4) est alimenté vers moteur (20) par une commande qu'effectue l'unité d'alimentation de courant électrique (621) pendant au moins une partie de la période de décélération.

2. Dispositif de commande de moteur (60) selon la revendication 1, dans lequel
l'unité de commande de fonctionnement (60A) comporte:
une unité de détermination d'autorisation (623) configurée pour déterminer s'il y a lieu ou non d'autoriser un arrêt du fonctionnement au ralenti du moteur sur base d'au moins l'une parmi une valeur de tension ou une valeur de courant de la batterie (4) acquise par l'unité d'acquisition d'état de batterie (622) lorsque le courant électrique de la batterie (4) est alimenté vers le moteur (20) par une commande qu'effectue l'unité d'alimentation de courant électrique (621) pendant au moins une partie de la période de décélération; et
une unité de commande de moteur (63) configurée pour commander le moteur (10) de manière à commuter de la période de décélération à un état où le fonctionnement au ralenti du moteur est arrêté si un arrêt du fonctionnement au ralenti du moteur est autorisé par l'unité de détermination d'autorisation (623), ainsi que si une condition d'arrêt du fonctionnement au ralenti qui est prédéfinie comme condition d'arrêt du fonctionnement au ralenti du moteur est remplie, et de manière à interdire la commutation de la période de décélération à un état où le fonctionnement au ralenti du moteur est arrêté si un arrêt du fonctionnement au ralenti du moteur n'est pas autorisé par l'unité de détermination d'autorisation (623).

3. Dispositif de commande de moteur selon la revendication 1 ou 2, dans lequel
l'unité d'alimentation de courant électrique (621) est configurée pour alimenter le courant électrique de la batterie (4) vers le moteur (20) de sorte que le moteur (20) génère une force motrice en commandant le moteur (20) pour accélérer ou ralentir le vilebrequin (15) pendant au moins une partie d'une période de décélération pendant laquelle le vilebrequin (15) tourne sans aucune accélération du véhicule (1) à partir d'un moment où le véhicule (1) commence à décélérer;
l'unité d'acquisition d'état de batterie (622) est configurée pour acquérir l'au moins l'une parmi une valeur de tension ou une valeur de courant de la batterie (4) au moins lorsque l'unité d'alimentation de courant électrique (621) effectue la commande pour alimenter le courant électrique de la batterie (4) vers le moteur (20) de sorte que le moteur (20) génère la force motrice en commandant le moteur (20) pour accélérer ou décélérer le vilebrequin (15) pendant au moins la partie de la période de décélération.

4. Dispositif de commande de moteur (60) selon l'une quelconque des revendications 1 à 3, dans lequel
le moteur (20) est connecté au vilebrequin (15) sans interposition d'un dispositif à même de faire varier un rapport de vitesse d'entrée/de sortie.

5. Dispositif de commande de moteur (60) selon l'une quelconque des revendications 1 à 4, dans lequel
le véhicule (1) comporte un opérateur d'accélération (8) configuré pour donner instructions pour que le véhicule (1) soit accéléré selon l'actionnement du conducteur, et
l'unité d'alimentation de courant électrique (621) est configurée pour effectuer une commande pour alimenter le courant électrique de la batterie (4) vers le moteur (20) de sorte que le moteur (20) génère une force motrice pendant au moins une partie d'une période pendant laquelle une instruction d'accélération de l'opérateur d'accélération (8) est arrêtée pendant la période de décélération.

6. Dispositif de commande de moteur (60) selon l'une quelconque des revendications 1 à 5, dans lequel
l'unité d'alimentation électrique (621) est configurée pour effectuer une commande pour alimenter le courant électrique de la batterie (4) vers le moteur (20) de sorte que le moteur (20) génère une force motrice pendant au moins une partie d'une période en dehors d'un période pendant laquelle le moteur (10) effectue une combustion de carburant pendant la période de décélération.

7. Dispositif de commande de moteur (60) selon l'une quelconque des revendications 1 à 6, dans lequel
le moteur (10) comporte un embrayage (9) pouvant être commuté entre un état de transmission dans lequel une force de rotation du vilebrequin (15) est transmise à un élément d'entraînement (3b) du véhicule (1) et un état de non-transmission où la force de rotation n'est pas transmise, et
l'unité d'alimentation de courant électrique (621) est configurée pour effectuer une commande pour alimenter le courant électrique de la batterie (4) vers le moteur (20) de sorte que le moteur (20) génère une force motrice pendant au moins une partie d'une période pendant laquelle l'embrayage (9) est à l'état de non-transmission où la force de rotation n'est pas transmise pendant la période de décélération.

8. Dispositif de commande de moteur (60) selon l'une quelconque des revendications 1 à 7, dans lequel
l'unité d'alimentation de courant électrique (621) est configurée pour effectuer une commande pour alimenter le courant électrique de la batterie (4) vers le moteur (20) de sorte que le moteur (20) génère une force motrice pendant au moins une partie d'une période pendant laquelle une vitesse de rotation du vilebrequin (15) est inférieure à une vitesse de rotation du vilebrequin (15) pendant le fonctionnement au ralenti du moteur pendant la période de décélération.

9. Dispositif de commande de moteur (60) selon l'une quelconque des revendications 2 à 7, comprenant par ailleurs une unité de détermination de condition d'arrêt (624) configurée pour déterminer si la condition d'arrêt de fonctionnement au ralenti est ou non remplie à un moment pendant la période de décélération,
dans lequel l'unité d'alimentation de courant électrique (621) est configurée pour effectuer une commande pour alimenter le courant électrique de la batterie (4) vers le moteur (20) de sorte que le moteur (20) génère une force motrice pendant au moins une partie d'une période pendant laquelle une vitesse de rotation du vilebrequin (15) est inférieure à une vitesse de rotation du vilebrequin (15) pendant le fonctionnement au ralenti du moteur pendant la période de décélération et après que l'unité de détermination de la condition d'arrêt (624) détermine que la condition d'arrêt du ralenti est remplie.

10. Dispositif de commande de moteur (60) selon l'une quelconque des revendications 1 à 9, comprenant une unité de commande de charge (625) configurée pour effectuer une commande pour charger la batterie (4) par de l'énergie électrique générée par le moteur (20) tandis que le moteur (20) est entraîné par le moteur (10).

11. Dispositif de commande de moteur (60) selon la revendication 6, dans lequel
le moteur (10) est configuré pour effectuer une opération de combustion où la combustion de carburant est répétée à des intervalles, et
l'unité d'alimentation de courant électrique (621) est configurée pour effectuer une commande pour alimenter le courant électrique de la batterie (4) vers le moteur (20) de sorte que le moteur (20) génère une force motrice pendant au moins une partie d'une période en dehors d'une période pendant laquelle le moteur (10) effectue la combustion du carburant dans une opération de combustion pendant la période de décélération.

12. Dispositif de commande de moteur (60) selon la revendication 6, dans lequel
l'unité d'alimentation de courant électrique (621) est configurée pour effectuer une commande pour alimenter le courant électrique de la batterie (4) vers le moteur (20) de sorte que le moteur (20) génère une force motrice pendant au moins une partie d'une période pendant laquelle l'opération de combustion du moteur (10) présentant une combustion de carburant répétée à des intervalles est arrêtée pendant la période de décélération.

13. Dispositif de commande de moteur (60) selon l'une quelconque des revendications 1 à 12, dans lequel
l'unité de commande de fonctionnement (60A) est configurée pour déterminer s'il y a lieu ou non de donner instruction au moteur (20) de faire tourner le vilebrequin (15) dans une direction inverse à une direction de rotation en avant provoquée par une opération de combustion du moteur (10) après un arrêt du fonctionnement au ralenti du moteur, la détermination étant basée sur au moins l'une parmi une valeur de tension ou une valeur de courant de la batterie (4).

14. Dispositif de commande de moteur (60) selon l'une quelconque des revendications 1 à 12, dans lequel
l'unité de commande de fonctionnement (60A) est configurée pour commander une vitesse de rotation du vilebrequin (15) au moment de donner instruction au moteur (20) de faire tourner le vilebrequin (15) dans une direction inverse à une direction de rotation en avant provoquée par une opération de combustion du moteur (10) après un arrêt du fonctionnement au ralenti du moteur, la commande étant basée sur au moins l'une parmi une valeur de tension ou une valeur de courant de la batterie (4).

15. Dispositif de commande de moteur (60) selon l'une quelconque des revendications 1 à 12, dans lequel
l'unité de commande de fonctionnement (60A) est configurée pour commander une force de freinage au moment de donner instruction au moteur (20) d'arrêter la rotation du vilebrequin (15) dans une direction inverse à une direction de rotation en avant provoquée par une opération de combustion du moteur (10) après un arrêt du fonctionnement au ralenti du moteur, la commande étant basée sur au moins l'une parmi une valeur de tension ou une valeur de courant de la batterie (4).

16. Unité de moteur comprenant le dispositif de commande de moteur (60) selon l'une quelconque des revendications 1 à 15, le moteur (10) et le moteur (20), l'unité de moteur étant configurée pour être montée sur le véhicule (1).

17. Véhicule (1) comprenant le dispositif de commande de moteur (60) selon l'une quelconque des revendications 1 à 15, le moteur (10), le moteur (20) et la batterie (4).
